# EUROPEAN PATENT APPLICATION

(11) **EP 4 682 680 A1**
(43) Date of publication of application: **21.01.2026**
(21) Application number: 24797317.5
(22) Date of filing: 09.04.2024
(51) Int. Cl.: G06F 3/01, G06F 3/048, G06T 19/00, G06F 3/00, G06F 9/451, G06N 3/02, G06V 20/20, G06V 20/52, G06V 40/20

(54) **AUGMENTED REALITY DEVICE FOR PROVIDING GUIDANCE FOR USER'S ACTION, AND OPERATION METHOD THEREFOR**

(30) Priority: 26.04.2023 KR 20230054973
(71) Applicant: Samsung Electronics Co., Ltd., Suwon-si, Gyeonggi-do 16677 (KR)
(72) Inventor: KOO, Bonkon, Suwon-si, Gyeonggi-do 16677 (KR); KIM, Doyoun, Suwon-si, Gyeonggi-do 16677 (KR); KIM, Jeongwon, Suwon-si, Gyeonggi-do 16677 (KR); RYU, Jaeyeol, Suwon-si, Gyeonggi-do 16677 (KR); SHIN, Sunghwan, Suwon-si, Gyeonggi-do 16677 (KR)
(74) Representative: Appleyard Lees IP LLP
(86) International application number: PCT/KR2024/004752
(87) International publication number: WO 2024/225660

(57) **Abstract**

A method, performed by an augmented reality device, for providing a guide for user activity, includes: obtaining, from a server of a policy provider, a policy comprising at least one activity about at least one of a location, a time, a space, or an object; inputting an image obtained through a camera to an artificial intelligence model, and recognizing, from the image, at least one activity of a user interacting with at least one of the location, the time, the space, or the object by using the artificial intelligence model; determining a policy performance level of the user by comparing the recognized at least one activity of the user with the at least one activity in the policy; and based on the policy performance level, outputting a graphic user interface (UI) for providing the guide for the user's activity on the policy.

## Description

### Technical Field

The disclosure relates to an augmented reality device for providing a guide for user's activity, and an operating method thereof. Specifically, the disclosure relates to an augmented reality device for monitoring user's activity and outputting a graphic user interface (UI) providing guide information about the activity, and an operating method of the augmented reality device.

### Background Art

Augmented reality is a technology in which virtual images are overlaid on, and displayed together with, a physical environment space or real world objects of the real world. Augmented reality devices using augmented reality technology (for example, smart glasses) have been useful in everyday life, such as information retrieval, route guidance, and camera photography.

Augmented reality devices are capable of obtaining data from the user's perspective, and may provide a progressive graphic user interface (UI) that analyzes and responds to user's activity in real time. For example, an augmented reality device may monitor the user's activity to warn the user in advance of situations in which the user may encounter unwanted results due to habitual or unconscious activity. In addition, for example, an augmented reality device may guide the user to achieve a desired result by providing information that the user was not aware of at the right time.

In order to provide a graphic UI that responds to user's activity in real time in an augmented reality environment where objects in real space and virtual objects coexist, the augmented reality device needs to require obtain and/or estimate real-life experience and value information of each user.

### Disclosure of Invention

### Solution to Problem

According to an aspect of the disclosure, a method, performed by an augmented reality device, for providing a guide for user activity, includes: obtaining, from a server of a policy provider, a policy comprising at least one activity about at least one of a location, a time, a space, or an object; inputting an image obtained through a camera to an artificial intelligence model, and recognizing, from the image, at least one activity of a user interacting with at least one of the location, the time, the space, or the object by using the artificial intelligence model; determining a policy performance level of the user by comparing the recognized at least one activity of the user with the at least one activity in the policy; and based on the policy performance level, outputting a graphic user interface (UI) for providing the guide for the user activity on the policy.

According to an aspect of the disclosure, an augmented reality device for providing a guide for user activity, includes: a communication interface configured to perform data communication with a server of a policy provider; a camera configured to obtain an image by photographing an object in a real space and a part of a body of a user; a display; and at least one processor configured to: control the communication interface to receive, from the server of the policy provider, a policy comprising at least one activity defined in connection with at least one of a location, a time, a space, or an object; input the image, obtained through the camera, to an artificial intelligence model, and recognize, from the image, at least one activity of the user interacting with at least one of the location, the time, the space, or the object, by using the artificial intelligence model; determine a policy performance level of the user by comparing the recognized at least one activity of the user with the at least one activity in the policy; and control the display to output, based on the policy performance level, a graphic user interface (UI) for providing the guide for the user's activity on the policy.

### Brief Description of Drawings

The above and other aspects, features, and advantages of certain embodiments of the present disclosure will be more apparent from the following description taken in conjunction with the accompanying drawings, in which:

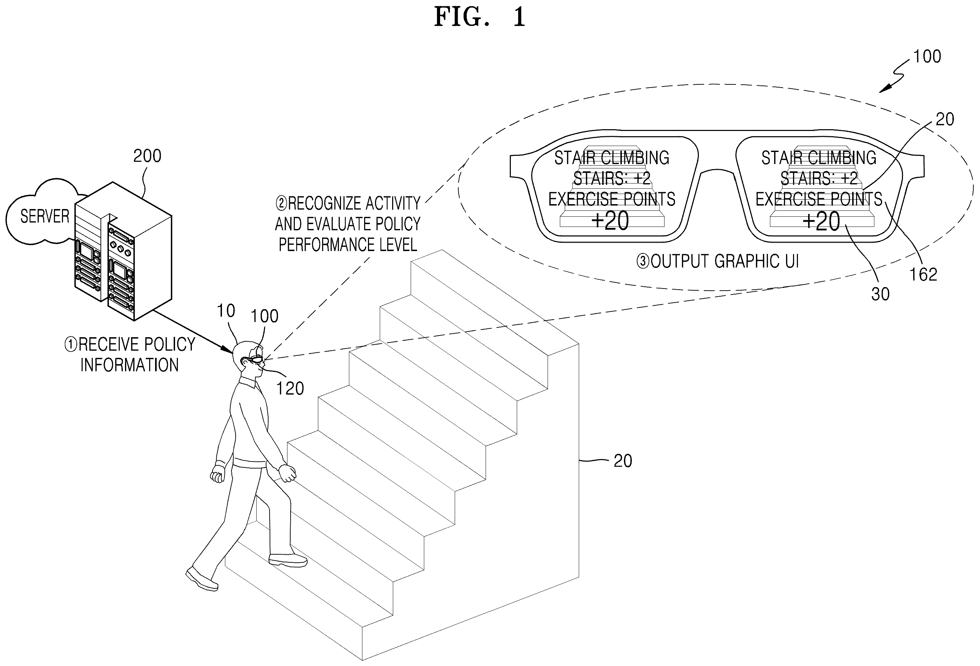

FIG. 1 is a diagram for describing an operation of an augmented reality device recognizing user's activity and outputting a graphic user interface (UI) for providing guidance regarding the activity, according to an embodiment of the disclosure;

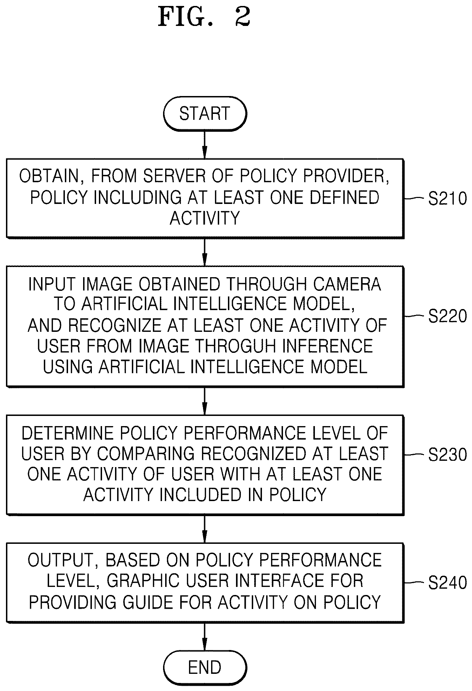

FIG. 2 is a flowchart of a method of operating an augmented reality device, according to an embodiment of the disclosure;

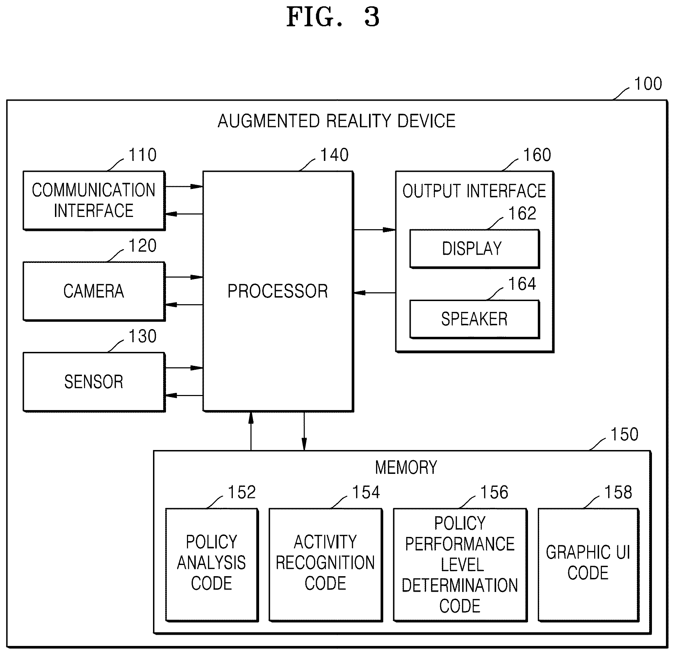

FIG. 3 is a block diagram of elements of an augmented reality device according to an embodiment of the disclosure;

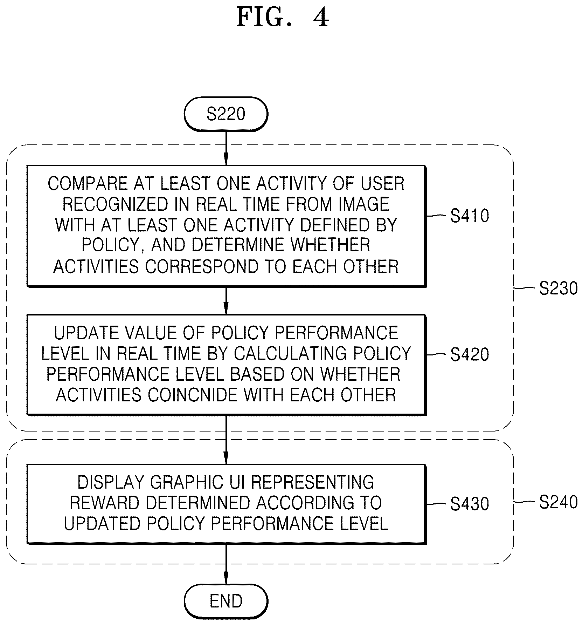

FIG. 4 is a flowchart of a method, performed by an augmented reality device, of updating a policy performance level according to user's activity and displays a graphic UI based on the updated policy performance level, according to an embodiment of the disclosure;

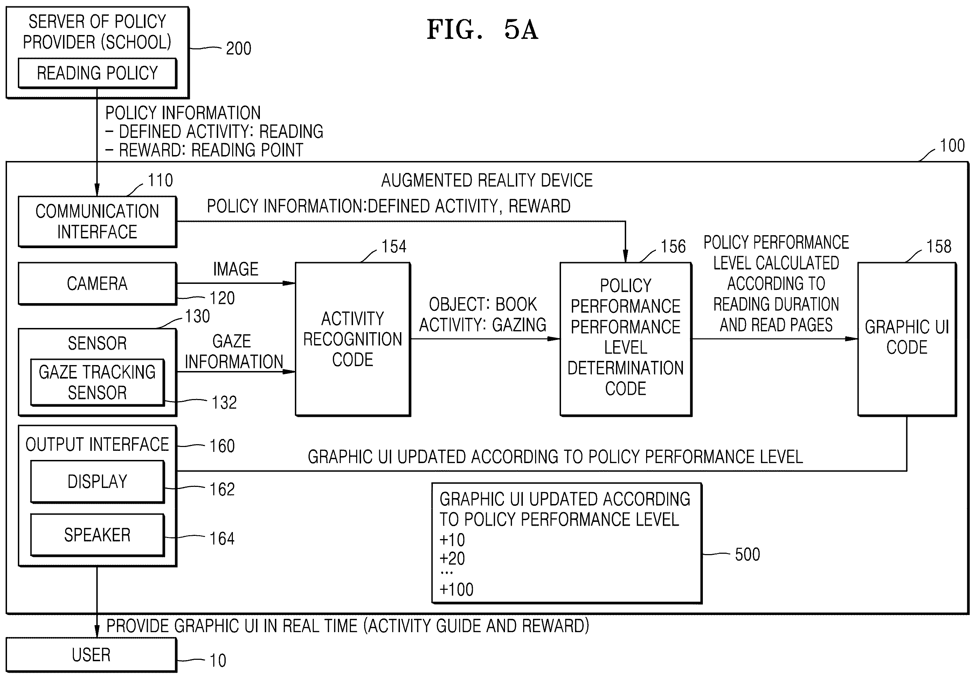

FIG. 5A is a diagram for describing an operation of an augmented reality device determining a policy performance level by recognizing user's activity according to a reading policy, and outputting a graphic UI for providing guide information for activity according to the policy performance level, according to an embodiment of the disclosure;

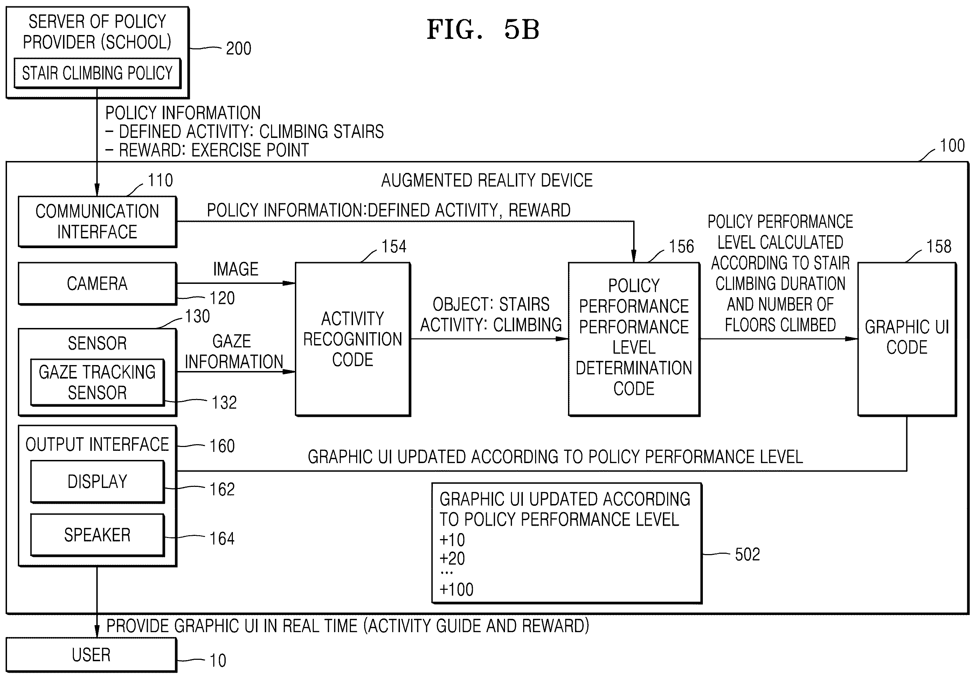

FIG. 5B is a diagram for describing an operation of an augmented reality device determining a policy performance level by recognizing user's activity according to a stair climbing policy, and outputting a graphic UI for providing guide information for the activity according to the policy performance level, according to an embodiment of the disclosure;

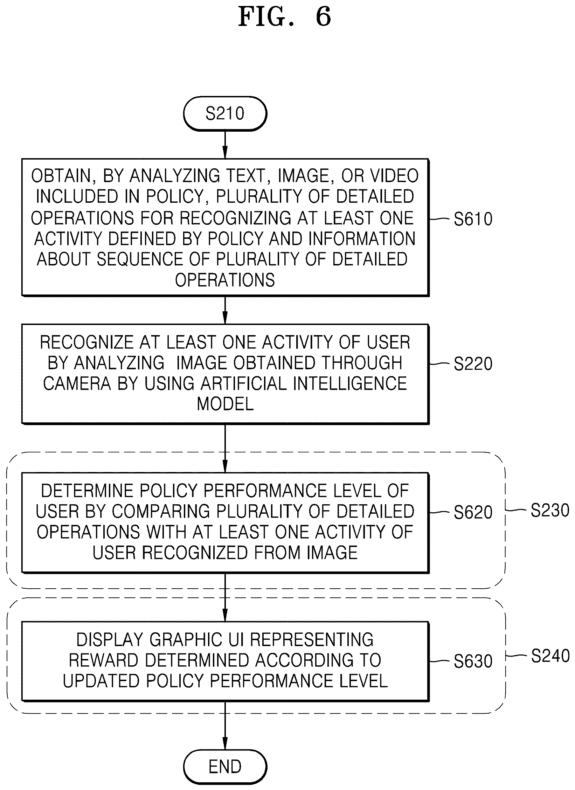

FIG. 6 is a flowchart of a method, performed by an augmented reality device, of analyzing a policy and determining a user's policy performance level based on the policy analysis result, according to an embodiment of the disclosure;

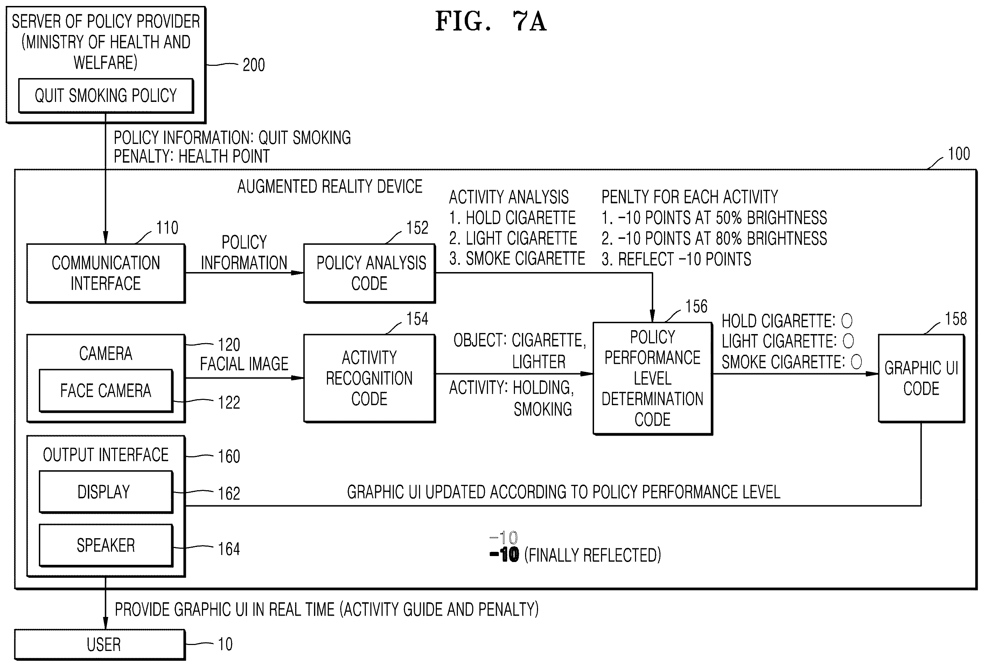

FIG. 7A is a diagram for describing an operation of an augmented reality device determining a policy performance level according to user's activity by analyzing a smoking quitting policy, and outputting a graphic UI based on the policy performance level, according to an embodiment of the disclosure;

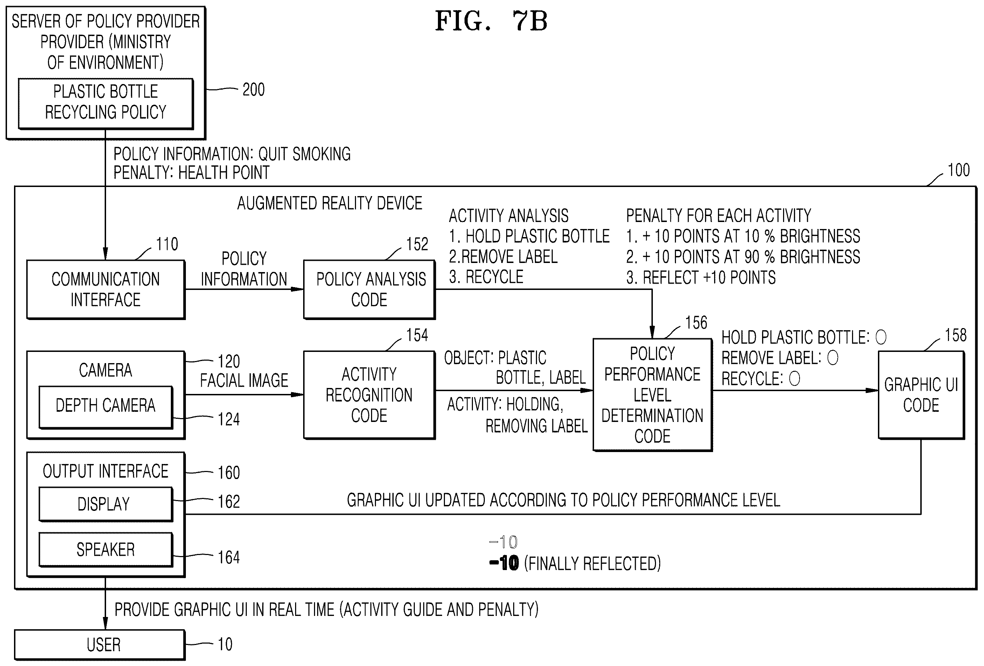

FIG. 7B is a diagram for describing an operation of an augmented reality device determining a policy performance level according to user's activity by analyzing a plastic bottle recycling policy, and outputting a graphic UI based on the policy performance level, according to an embodiment of the disclosure;

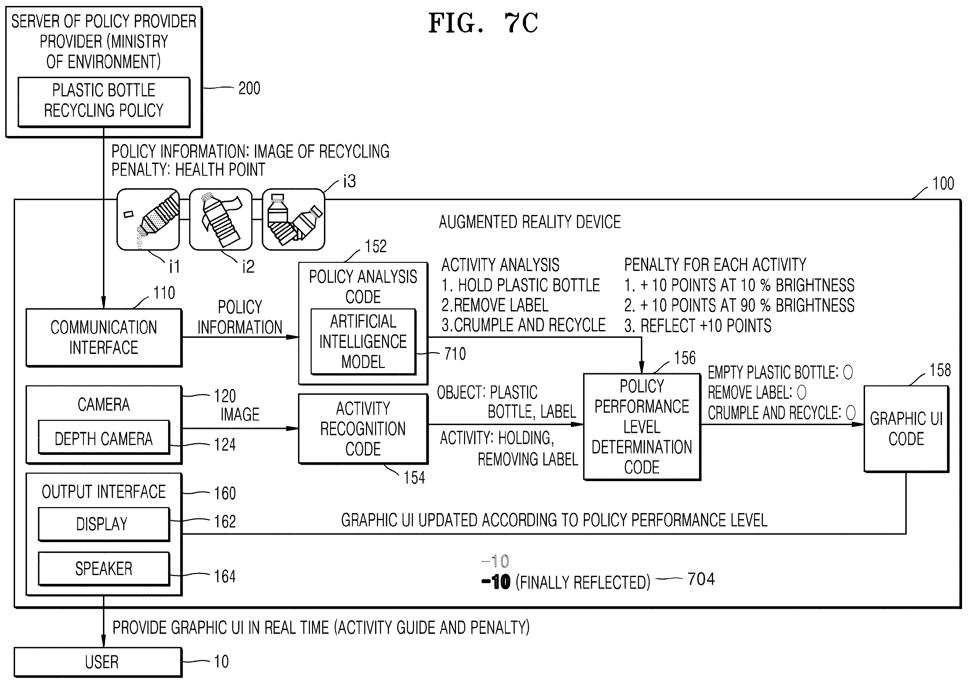

FIG. 7C is a diagram for describing an operation of an augmented reality device determining a policy performance level according to user's activity by analyzing a plastic bottle recycling policy, and outputting a graphic UI based on the policy performance level, according to an embodiment of the disclosure;

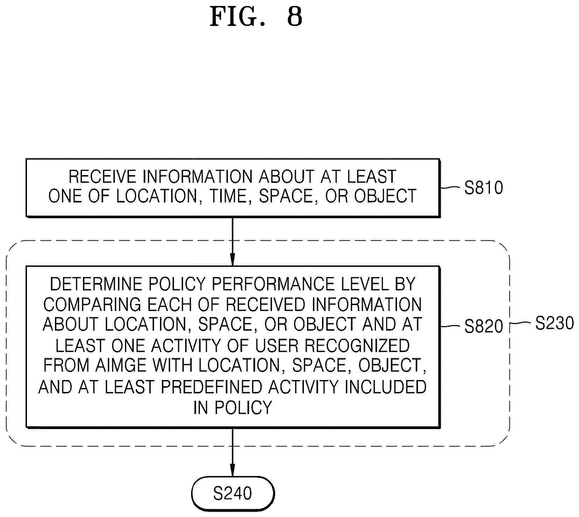

FIG. 8 is a flowchart of a method, performed by an augmented reality device, of receiving information from an external device and determining a policy performance level according to user's activity based on the received information, according to an embodiment of the disclosure;

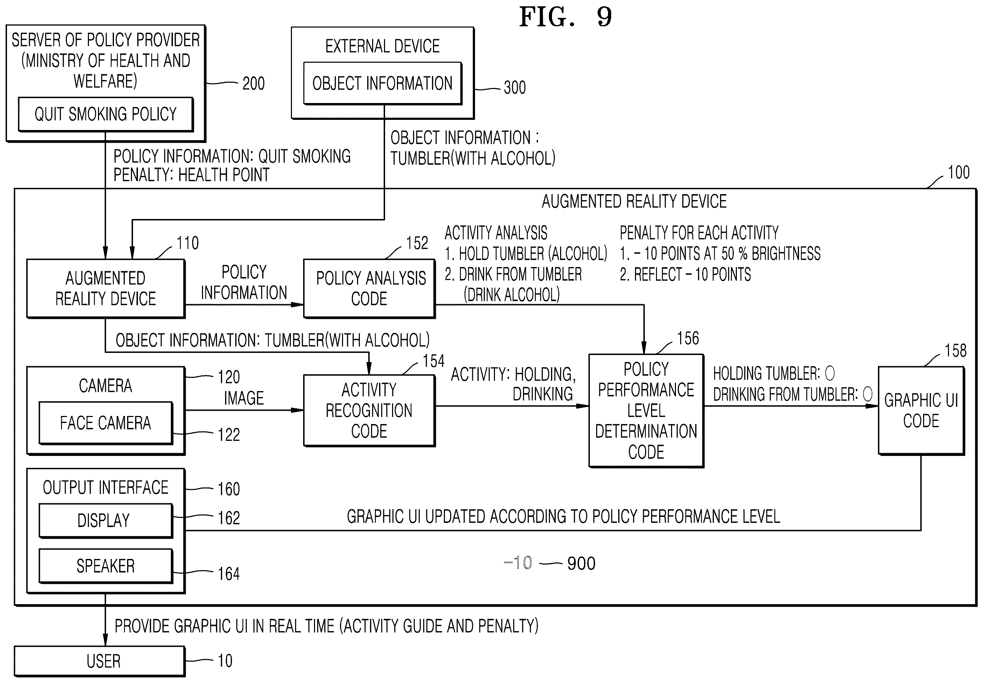

FIG. 9 is a diagram for describing an operation of an augmented reality device determining a policy performance level by recognizing user's activity according to an abstinence from drinking policy, and outputting a graphic UI for providing guide information for activity according to the policy performance level, according to an embodiment of the disclosure;

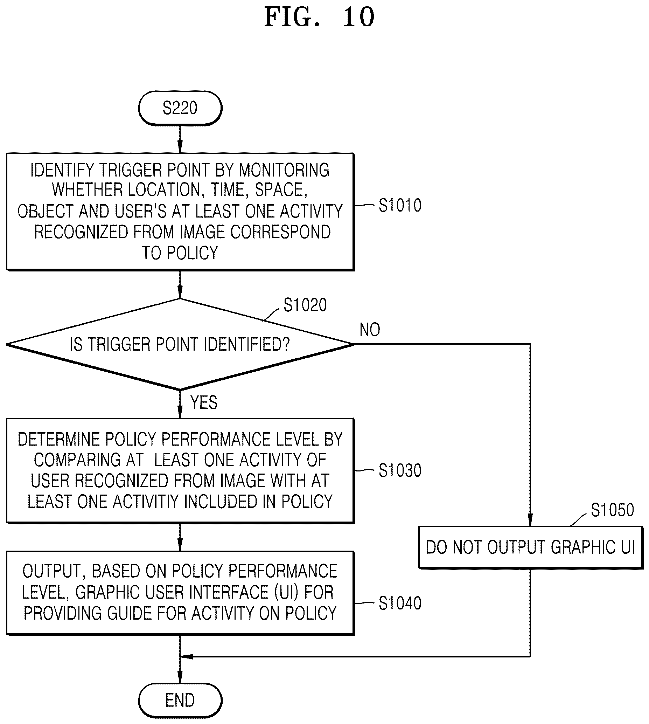

FIG. 10 is a flowchart of a method, performed by an augmented reality device, of identifying a trigger point for determining a policy performance level based on user's activity, and outputting a graphic UI according to identification of the trigger point, according to an embodiment of the disclosure;

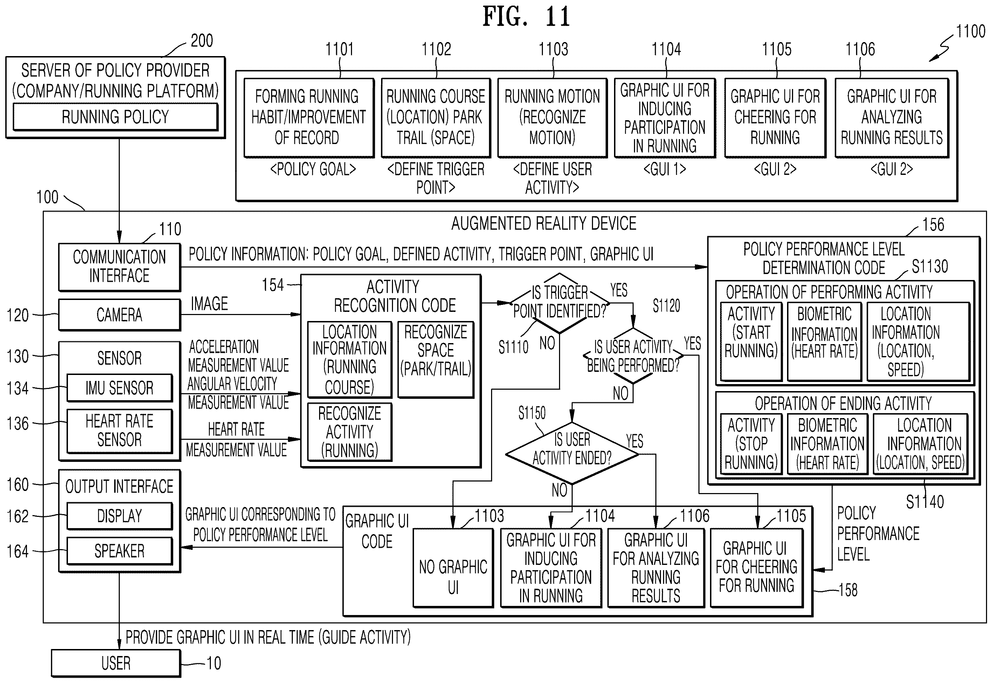

FIG. 11 is a diagram for describing an operation of an augmented reality device determining a policy performance level by recognizing user's activity according to a running policy, and outputting a graphic UI for providing guide information for activity according to the policy performance level, according to an embodiment of the disclosure;

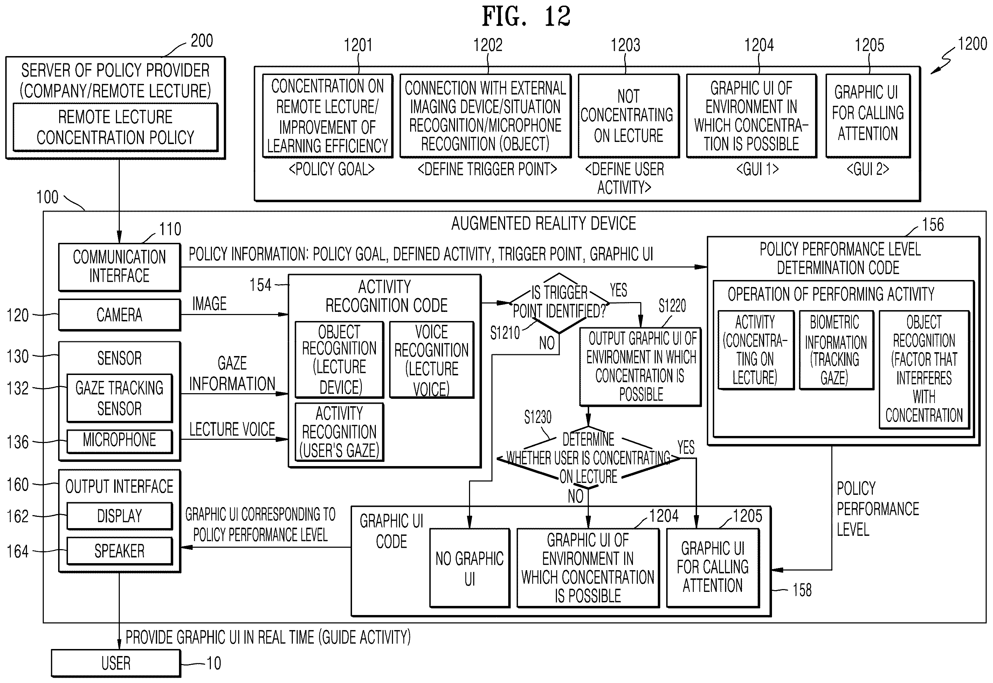

FIG. 12 is a diagram for describing an operation of an augmented reality device determining a policy performance level by recognizing user's activity according to a remote lecture concentration policy, and outputting a graphic UI for providing guide information for activity according to the policy performance level, according to an embodiment of the disclosure;

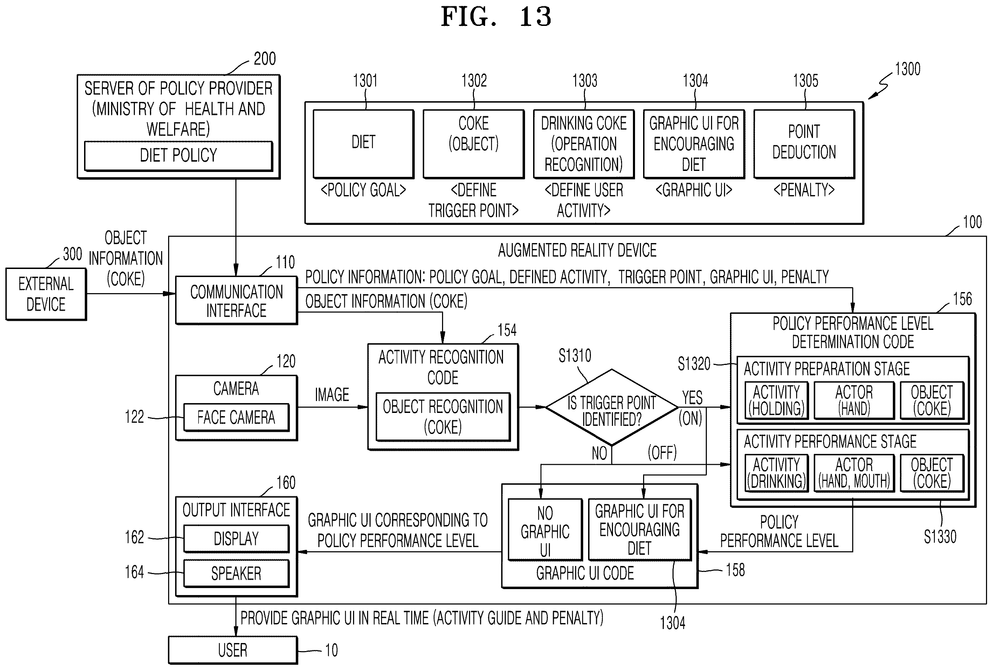

FIG. 13 is a diagram for describing an operation of an augmented reality device determining a policy performance level by recognizing user's activity according to a diet policy, and outputting a graphic UI for providing guide information for activity according to the policy performance level, according to an embodiment of the disclosure;

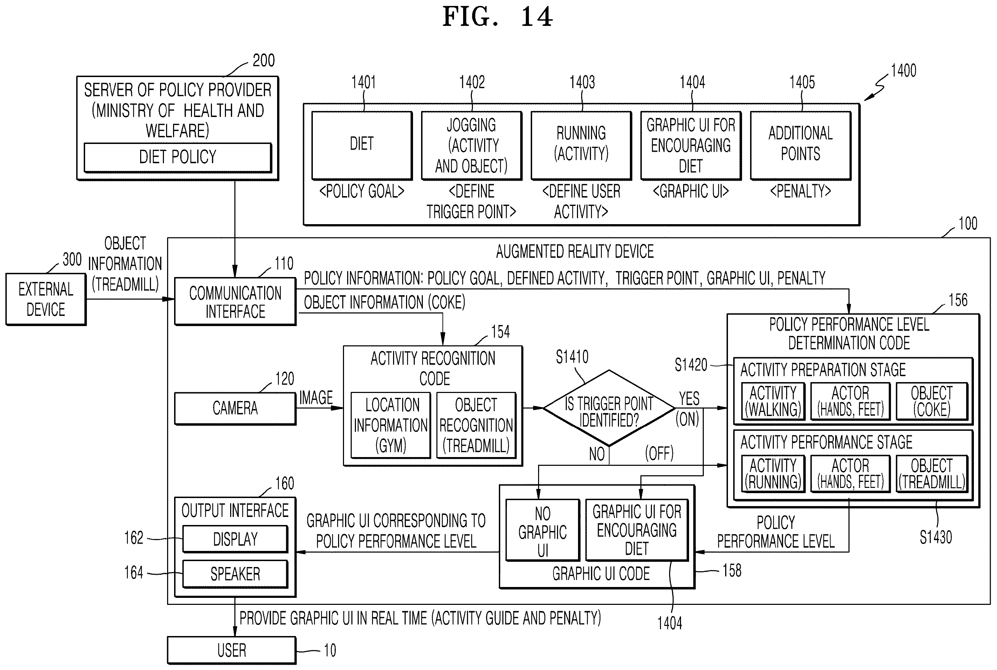

FIG. 14 is a diagram for describing an operation of an augmented reality device determining a policy performance level by recognizing user's activity according to a diet policy, and outputting a graphic UI for providing guide information for activity according to the policy performance level, according to an embodiment of the disclosure;

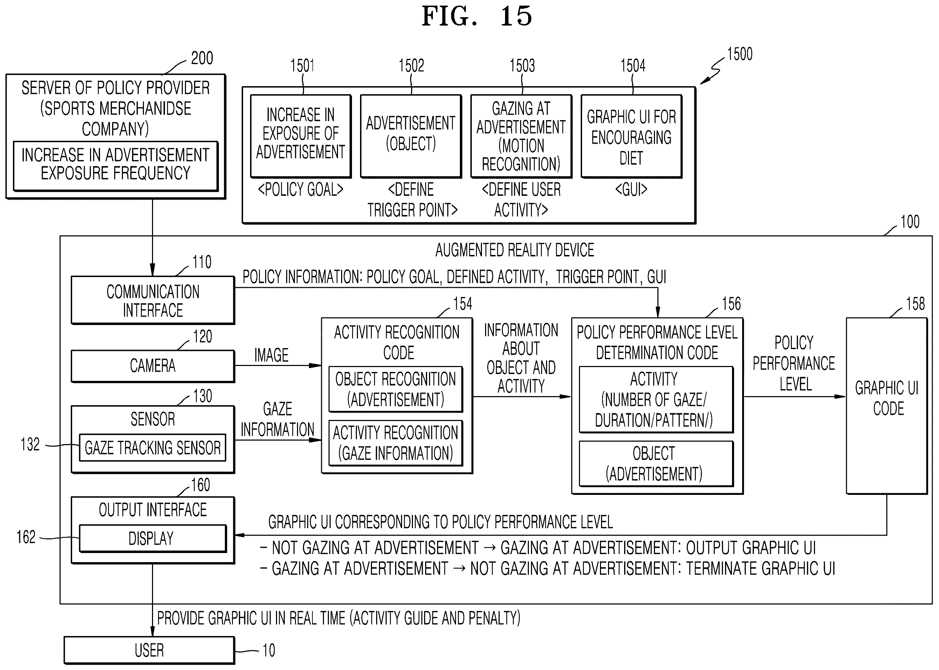

FIG. 15 is a diagram for describing an operation of an augmented reality device determining a policy performance level by recognizing user's activity according to a policy of increasing advertisement exposure frequency, and outputting a graphic UI for providing guide information for activity according to the policy performance level, according to an embodiment of the disclosure;

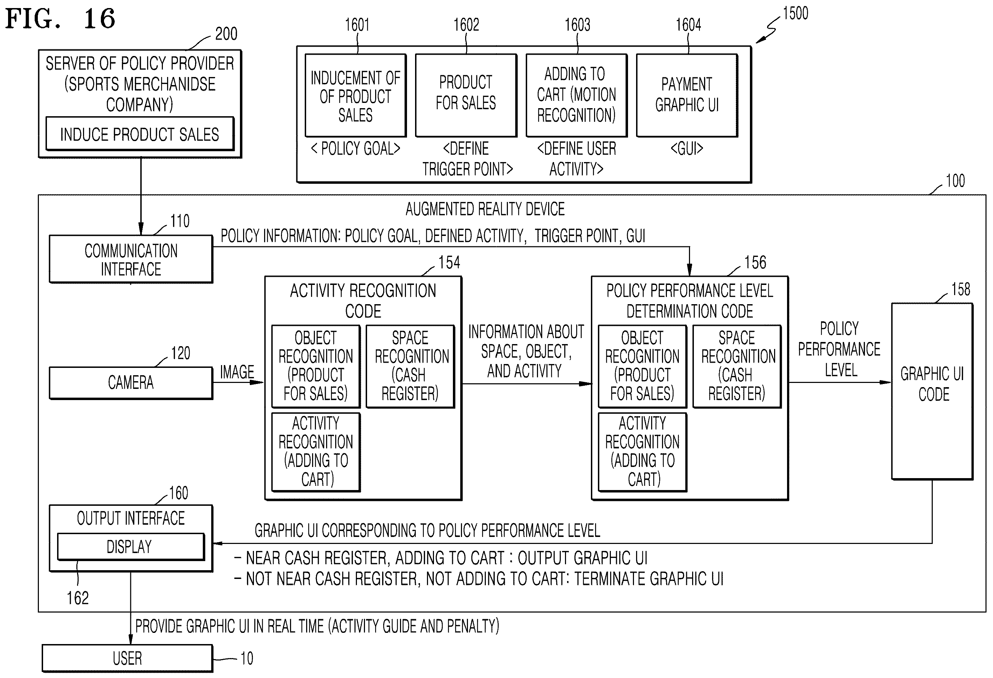

FIG. 16 is a diagram for describing an operation of an augmented reality device determining a policy performance level by recognizing user's activity according to a policy to induce product sales, and outputting a graphic UI for providing guide information for activity according to the policy performance level, according to an embodiment of the disclosure;

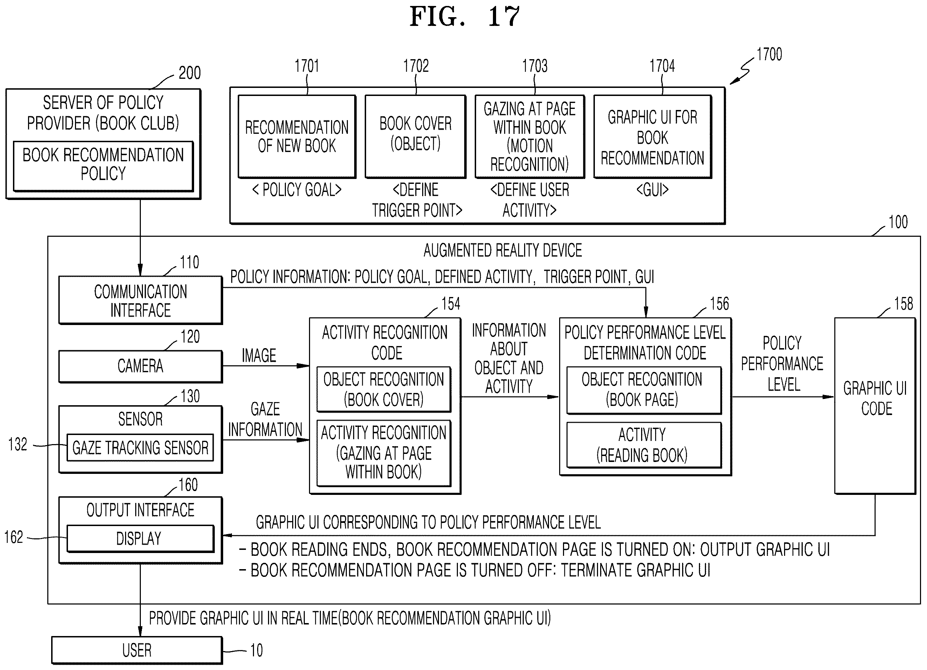

FIG. 17 is a diagram for describing an operation of an augmented reality device determining a policy performance level by recognizing user's activity according to a book recommendation policy, and outputting a graphic UI for providing guide information for activity according to the policy performance level, according to an embodiment of the disclosure;

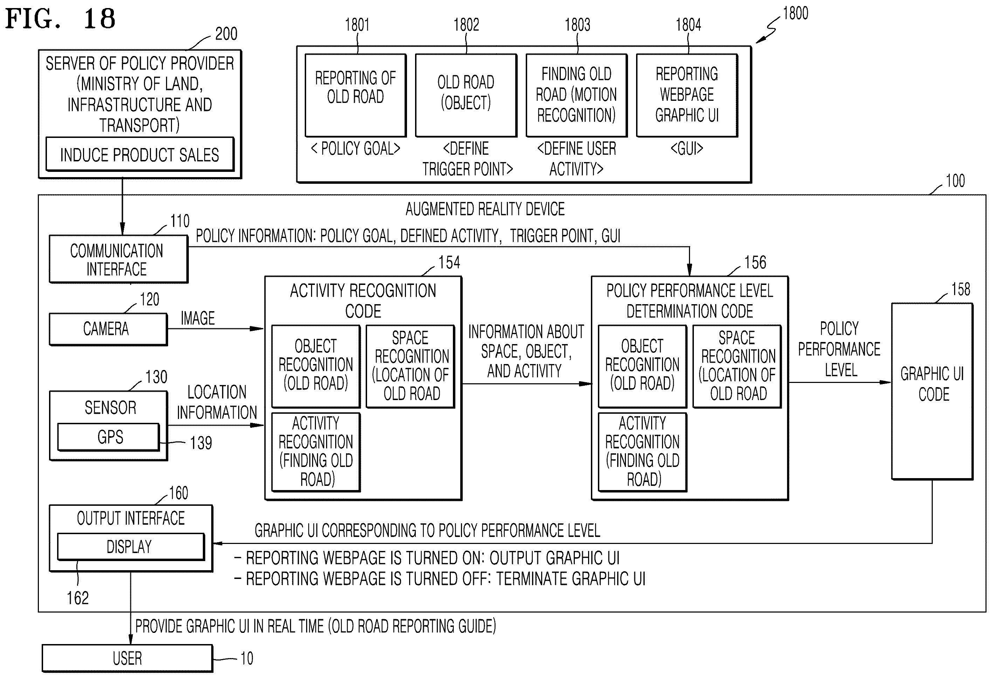

FIG. 18 is a diagram for describing an operation of an augmented reality device determining a policy performance level by recognizing user's activity according to an old road reporting policy, and outputting a graphic UI for providing guide information for activity according to the policy performance level, according to an embodiment of the disclosure;

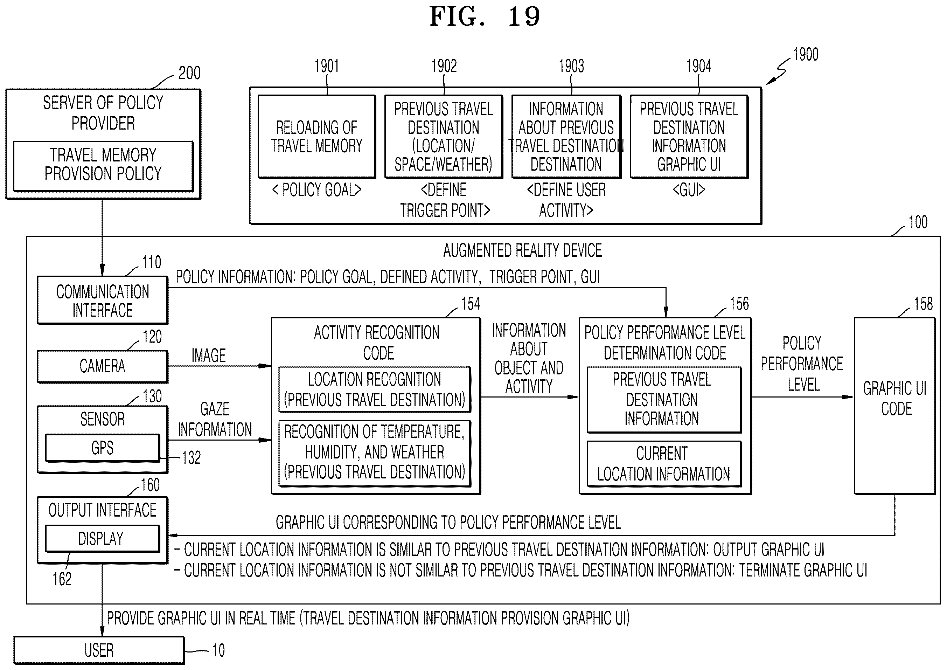

FIG. 19 is a diagram for describing an operation of an augmented reality device determining a policy performance level by recognizing user's activity according to a travel memory provision policy, and outputting a graphic UI for providing guide information for activity according to the policy performance level, according to an embodiment of the disclosure;

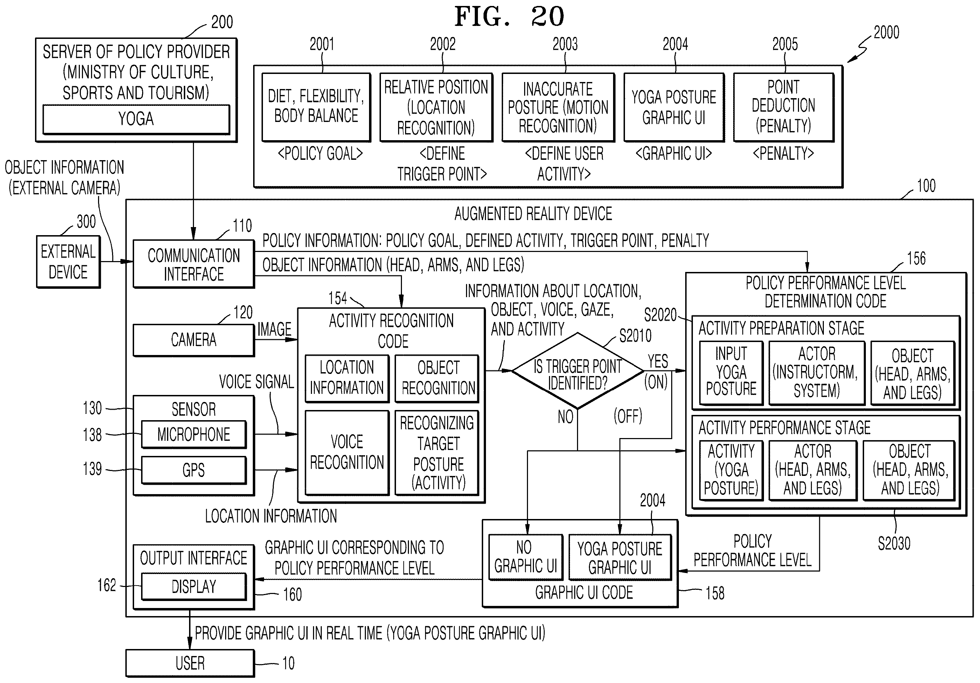

FIG. 20 is a diagram for describing an operation of an augmented reality device determining a policy performance level by recognizing user's activity according to a yoga policy, and outputting a graphic UI for providing guide information for activity according to the policy performance level, according to an embodiment of the disclosure; and

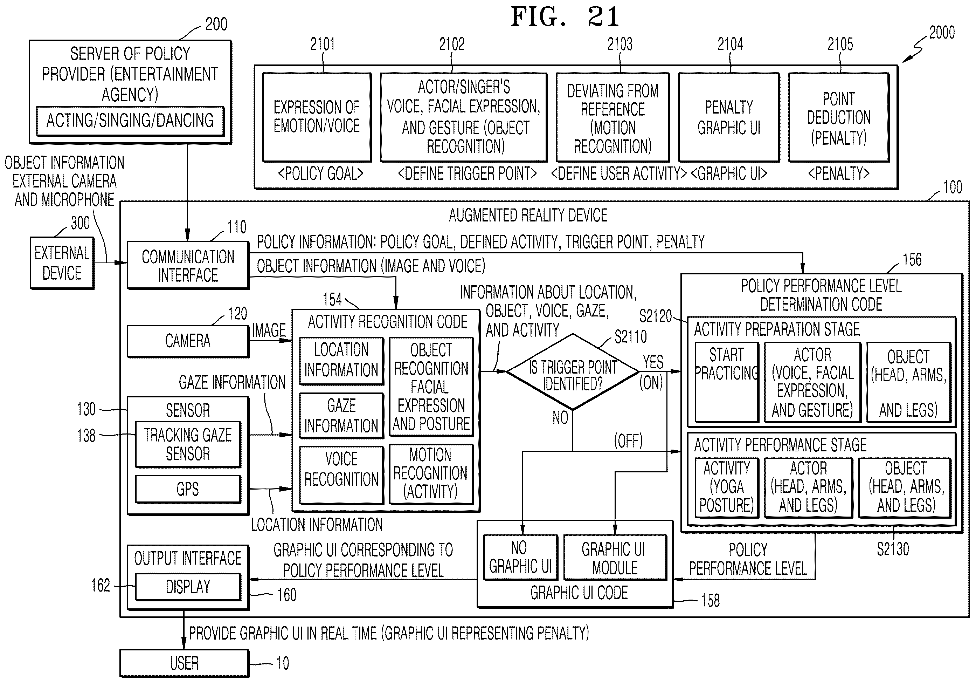

FIG. 21 is a diagram for describing an operation of an augmented reality device determining a policy performance level by recognizing user's activity according to an acting/singing/dancing policy, and outputting a graphic UI for providing guide information for activity according to the policy performance level, according to an embodiment of the disclosure.

### Mode of the Invention

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the disclosure. Thus, the terms used herein have to be defined based on the meaning of the terms together with the description throughout the specification.

An expression used in the singular may encompass the expression in the plural, unless it has a clearly different meaning in the context. Terms used herein, including technical or scientific terms, may have the same meaning as commonly understood by one of ordinary skill in the art described in the disclosure.

When a part "includes" or "comprises" an element, unless there is a particular description contrary thereto, the part may further include other elements, not excluding the other elements. In addition, terms such as "... unit" and "... module" used in the disclosure refer to a unit that processes at least one function or operation, which may be implemented as hardware or software or as a combination of hardware and software.

The expression "configured (or set) to" used in the disclosure may be interchangeably used with, for example, "suitable for", "having the capacity to", "designed to", "adapted to", "made to", or "capable of", depending on the context. The term "configured (or set) to" may not necessarily mean "specifically designed to" in hardware. Instead, in some situations, the expression "system configured to" may mean that the system is "capable of" working with other devices or components. For example, the phrase "processor configured (or set) to perform A, B, and C" refers to a processor dedicated to performing the operations (e.g., an embedded processor), or a generic-purpose processor) capable of performing the operations by executing one or more software programs stored in a memory (e.g., a central processing unit (CPU) or application processor).

In addition, in the disclosure, it should be understood that, when an element is referred to as "connected" to another element, the element may be directly connected to the other element, but may be connected through another element therebetween, unless there is a special statement to the contrary.

In the disclosure, "augmented reality" means showing virtual images together in a physical environment space of the real world, or showing real objects and virtual images together.

In the disclosure, an "augmented reality device" is capable of expressing augmented reality, for example, glasses-shaped augmented reality glasses worn on user's face, head mounted display (HMD) worn on the head, or augmented reality helmets.

In the disclosure, functions related to "artificial intelligence" are operated through a processor and memory. A processor may include one or more processors. The one or more processors may include a universal processor such as a CPU, an application processor (AP), a digital signal processor (DSP), etc., a dedicated graphic processor such as a graphics processing unit (GP), a vision processing unit (VPU), etc., or a dedicated artificial intelligence (AI) processor such as a neural processing unit (NPU). The one or more processors control input data to be processed according to predefined operation rules or AI models stored in the memory. When the one or more processors are the dedicated AI processors, the dedicated AI processors may be designed in a hardware structure that is specific to dealing with a particular AI model.

The predefined operation rules or AI models are characterized by being made through training. Specifically, the predefined operation rule or the AI model being made through training refers to the predefined operation rule or the AI model established to perform a desired feature (or an object) being made when a basic AI model is trained by a training algorithm with a lot of training data. Such training may be performed by the device itself in which AI is performed according to the disclosure, or by a separate server and/or system. Examples of the learning algorithm may include supervised learning, unsupervised learning, semi-supervised learning, or reinforcement learning, without being limited thereto.

In the disclosure, the AI model may include a plurality of neural network layers. Each of the plurality of neural network layers may have a plurality of weight values, and perform neural network operation through operation between an operation result of the previous layer and the plurality of weight values. The plurality of weight values owned by the plurality of neural network layers may be optimized by training results of the AI model. For example, the plurality of weight values may be updated to reduce or minimize a loss value or cost value obtained by the AI model during a training procedure. An artificial neural network may include a deep neural network (DNN), for example, a convolutional neural network, a recurrent neural network, a restricted Boltzmann machine, a deep belief network, a bidirectional recurrent deep neural network, or a deep Q-network, without being limited thereto.

In the disclosure, the term "policy" means a set of at least one activity defined by a policy provider to achieve a goal. In an embodiment of the disclosure, the policy may mean information about at least one activity that interacts with at least one of a specific location, time, space, or object, and a sequence of performing the at least one activity. In an embodiment of the disclosure, the policy may be provided by a server of a policy provider.

Hereinafter, embodiments of the disclosure will be described in detail with reference to the accompanying drawings such that one of ordinary skill in the art may easily implement the disclosure. However, the disclosure may be embodied in many different forms and is not limited to the embodiments of the disclosure set forth herein.

Hereinafter, embodiments of the disclosure will be described in detail with reference to accompanying drawings.

FIG. 1 is a diagram for describing an operation of an augmented reality device 100 recognizing activity of a user 10 and outputting a graphic user interface (UI) 30 for providing guidance regarding the activity, according to an embodiment of the disclosure.

The augmented reality device 100 is a device capable of expressing augmented reality and may include, for example, glasses-shaped augmented reality glasses worn on the user's face. In FIG. 1, the augmented reality device 100 is shown as augmented reality glasses. However, the disclosure is not limited thereto. In another example, the augmented reality device 100 may be implemented as an HMD worn on the head, or augmented reality helmet.

Referring to FIG. 1, the augmented reality device 100 may include a camera 120. In FIG. 1, only the minimum elements for describing a function and/or operation of the augmented reality device 100 are shown, and elements included in the augmented reality device 100 are not necessarily limited to those shown in FIG. 1. The elements of the augmented reality device 100 are described in detail with reference to FIG. 3.

In an embodiment of the disclosure, when the user mounts the augmented reality device 100 on the user's head, the camera 120 is configured to photograph objects in a real space and parts of the user's body. In FIG. 1, the augmented reality device 100 is shown to include one camera. However, the disclosure is not limited thereto. In an embodiment of the disclosure, the augmented reality device 100 may include a first camera corresponding to the user's left eye, and a second camera corresponding to the user's right eye.

In the embodiment shown in FIG. 1, the augmented reality device 100 may receive a policy from a server 200 of a policy provider (first operation), determine a policy performance level of the user by recognizing user's activity related to the received policy (second operation), and output the graphic UI 30 for providing guide information regarding the user's activity based on the policy performance level (third operation). Hereinafter, the function and/or operation of the augmented reality device 100 are described with reference to FIGS. 1 and 2 together.

FIG. 2 is a flowchart of a method of operating an augmented reality device, according to an embodiment of the disclosure.

In operation S210, the augmented reality device 100 may obtain, from the server 200 (see FIG. 1) of the policy provider, a policy including at least one predefined activity. In the disclosure, the term "policy" means a set of at least one activity defined by a policy provider to achieve a goal. The "goal" refers to the final result that the user achieves or aims for through an activity, movement, or activity, such as quit smoking, quit drinking, reading, exercising (e.g., climbing stairs, running, etc.), dieting, etc. The goal is determined by the user or policy provider and is not limited to the examples described above. In an embodiment of the disclosure, the policy may include information about at least one activity that interacts with at least one of a specific location, time, space, or object, and a sequence of performing the at least one activity. In an embodiment of the disclosure, the policy may include information about a reward or penalty set according to policy performance.

Referring to the embodiment shown in FIG. 1 together with FIG. 2, the policy provider is, for example, the Ministry of Health and Welfare of the government, and the augmented reality device 100 may receive, from the server 200, information about the "stair climbing" policy from among the policies provided by the Ministry of Health and Welfare. The stair climbing policy may include, for example, information about at least one activity (for example, climbing by foot) defined in association with a space (for example, a hallway) and an object (for example, stairs), to achieve the goal of "exercising". In an embodiment of the disclosure, the stair climbing policy may include rewards (for example, exercise points) according to the number of floors of stairs climbed. In another example, when the policy provided by the policy provider is a flash mob, the "flash mob policy" may include information about at least one activity (for example, dancing) defined in association with a time (for example, 3 p.m.) and location (for example, Seoul City Hall Plaza), which are preset by the policy provider.

In an embodiment of the disclosure, the augmented reality device 100 may receive a user input for selecting any one policy from among a plurality of policies provided by the server 200 of the policy provider, and select a policy to be achieved based on the received user input. The augmented reality device 100 may receive information about the selected policy from the server 200 of the policy provider. In the disclosure, the "policy provider" may be, for example, a government agency, company, school, social organization, non-governmental organization (NGO), club, etc., but is not limited thereto.

In an embodiment of the disclosure, a plurality of policy providers may be present. In this case, the augmented reality device 100 may receive a user input for selecting any one server from among servers of the plurality of policy providers, and receive information about a policy provided by the selected server based on the received user input.

In operation S220, the augmented reality device 100 may input an image obtained through the camera 120 (see FIG. 1) to an AI model, and perform inference using the AI model and recognize at least one activity of the user from the image. The augmented reality device 100 may obtain images by photographing, using the camera, objects included in the real space and parts of the user's body (for example, the user's hands, legs, etc.). The augmented reality device 100 may recognize the user's activity from the image through inference using an AI model. In an embodiment of the disclosure, the augmented reality device 100 may recognize at least one of a location, a time, a space, or an object from the image by using the AI model, and recognize at least one activity of the user interacting with the recognized at least one of the location, the time, the space, or the object. In an embodiment of the disclosure, an "AI model" may include a deep neural network model trained to detect an object from input image data and recognize an operation or behavior from the recognized object. The deep neural network model may be, for example, a convolutional neural network (CNN) model. However, the disclosure is not limited thereto, and the deep neural network model may include, for example, at least one of a recurrent neural network (RNN) model, restricted Boltzmann machine (RBM) model, deep belief network (DBN) model, bidirectional recurrent deep neural network (BRDNN), or deep Q-network model.

For example, the augmented reality device 100 may recognize user's activity by using panoptic segmentation for obtaining object-specific identification information or activity recognition in egocentric video for recognizing sequential operation or activity from a plurality of image frames. However, the disclosure is not limited thereto, and the augmented reality device 100 may recognize user's activity from an image by using all known activity recognition models.

In operation S230, the augmented reality device 100 may determine user's policy performance level by comparing at least one recognized activity of the user with at least one activity included in the policy. In an embodiment of the disclosure, the augmented reality device 100 may compare at least one activity recognized in real time from an image with at least one activity included in a policy to determine whether the activities match with each other. The augmented reality device 100 may calculate a score representing a policy performance level as a numerical value based on whether the activities match. The augmented reality device 100 may update the calculated policy performance level score in real time.

Referring to the embodiment shown in FIG. 1 together with FIG. 2, the augmented reality device 100 may recognize, from an image obtained by photographing through the camera 120, at least one activity (for example, "climbing up by foot") interacting with a space (for example, "stairs") and an object (for example, "stairs"), and determine a policy performance level by comparing the recognized at least one activity of the user with at least one activity (for example, climbing up the stairs) defined by the "stair climbing policy". The augmented reality device 100 may recognize user's sequential activity (for example, climbing several floors of stairs) from a plurality of image frames sequentially obtained through the camera 120, and compare the recognized user's sequential activity with the activity included in the stair climbing policy and update in real time a score representing a policy performance level according to whether the activities match with each other.

In another example, the augmented reality device 100 may recognize, from an image, at least one activity (for example, dancing movement defined by a flash mob) of the user interacting with a specific time (for example, 3 p.m.) and a specific place (for example, Seoul City Hall Plaza), and compare the at least one recognized activity of the user with at least one activity (for example, dancing) defined by a "flash mob policy" to determine a policy performance level. For example, when an "alarm policy" is received from a policy provider, the augmented reality device 100 may recognize user's activity of wearing the augmented reality device 100 at a time the alarm is set (e.g., 8 a.m.), and compare the recognized user's activity with at least one activity (e.g., wearing the augmented reality device 100) defined by the "alarm policy" to determine a policy performance level.

In operation S240, the augmented reality device 100 may output a graphic user interface (UI) for providing a guide for activity on a policy on the basis of the policy performance level. In an embodiment of the disclosure, the augmented reality device 100 may output text or an icon indicating a reward provided according to the policy performance level. In an embodiment of the disclosure, the augmented reality device 100 may update the output graphic UI based on the updated policy performance level. For example, the augmented reality device 100 may update the policy performance level based on whether the user's activity matches with the policy, and adjust the brightness of the text or icon indicating the reward based on the updated policy performance level. For example, the augmented reality device 100 may, when only some of a plurality of activities defined by the policy are performed and the policy performance level is less than a preset threshold, output the brightness of the text or icon representing the reward at less than 50 %, and when the user performs all of the activities defined by the policy and the policy performance level is 100 %, output the brightness of the text or icon representing the reward at 100 %.

In an embodiment of the disclosure, the augmented reality device 100 may display a graphic UI corresponding to a policy performance level. For example, when the user does not perform the activities defined by the policy, the augmented reality device 100 may output a graphic UI inducing user's activity. In another example, when the user is performing the activities defined by the policy, the augmented reality device 100 may output a graphic UI including text or an icon for cheering the user's activity. In another example, when the user performs all of the activities included in the policy, the augmented reality device 100 may output a graphic UI representing results of analyzing the results of the user's activity.

When the augmented reality device 100 is implemented as augmented reality glasses (e.g., smart glasses), the augmented reality device 100 may generate a graphic UI by using an optical engine, and output the graphic UI by projecting image data for implementing the graphic UI to a waveguide included in a lens by using a projector. However, the disclosure is not limited thereto, and the augmented reality device 100 may include a speaker, induce user's activity through the speaker, or output voice messages or acoustic signals, such as cheering.

Referring to the embodiment shown in FIG. 1 together with FIG. 2, the augmented reality device 100 may display stairs 20, which are real objects, through a display 162, and display the graphic UI 30 related to the stair climbing policy together with the stairs 20. The graphic UI 30 displayed through the display 162 may include a reward according to a policy performance level determined according to the user's activity (for example, climbing up the stairs). When the user climbs the stairs two floors, the augmented reality device 100 may display the graphic UI 30 including text indicating a reward defined by the stair climbing policy, for example, "+ 20 points".

The disclosure provides the augmented reality device 100 for obtaining data from the user's perspective in an augmented reality environment where an object of the real space and a virtual object coexist, and a progressive graphic UI 30 that reacts by recognizing and analyzing user's activity in real time, and an operating method thereof.

The augmented reality device 100 according to the embodiments shown in FIGS. 1 and 2, the augmented reality device 100 may obtain a policy from the server 200 of an external policy provider, recognize and analyze activity of the user 10 from an image, and output the graphic UI 30 for providing, in real time, helpful information in performing a policy selected by the user 10 and policy compliance of the activity of the user 10, so that the user 10 may receive assistance in better pursuing his or her experiences or values. In addition, the augmented reality device 100 according to an embodiment of the disclosure may output the graphic UI 30 for inducing, cheering for, or guiding user's activity according to the policy performance level, to provide motivation so that the user achieves specific goals defined by the policy, and improve the efficiency of goal achievement.

FIG. 3 is a block diagram of elements of an augmented reality device 100 according to an embodiment of the disclosure.

Referring to FIG. 3, the augmented reality device 100 may include a communication interface 110, a camera 120, a sensor 130, a processor 140, a memory 150, and an output interface 160. The communication interface 110, the communication interface 110, the sensor 130, the processor 140, the memory 150, and the output interface 160 may be electrically and/or physically connected to each other. In FIG. 3, only the essential elements for describing a function and/or operation of the augmented reality device 100, and elements included in the augmented reality device 100 are not limited to those shown in FIG. 3. In an embodiment of the disclosure, the augmented reality device 100 may be implemented as augmented reality glasses worn on the user's head, and in this case, may further include a power supply unit (for example, a battery) for supplying driving power to the communication interface 110, the camera 120, the sensor 130, the processor 140, and the output interface 160. In an embodiment of the disclosure, the augmented reality device 100 may not include a speaker 164.

The communication interface 110 may be configured to transmit and receive data to and from a server or external device through a wired or wireless communication network. For example, the communication interface 110 may perform data communication with a server or external device by using at least one of data communication schemes including wired local area network (LAN), wireless LAN, Bluetooth, zigbee, Wi-Fi Direct (WFD), infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliance (WiGig), or radio frequency (RF) communication. However, the disclosure is not limited thereto, and when the augmented reality device 100 is implemented as a wearable device such as smart glasses, the communication interface 110 may transmit and receive data to and from a server or external device through a network that complies with mobile communication standards, such as Code-Division Multiple Access (CDMA), Wideband Code-Division Multiple Access (WCDMA), 3rd generation (3G), 4th generation (4G) (Long-Term Evolution (LTE)), 5th generation (5G) Sub 6, and/or a communication scheme using millimeter waves (mmWave).

In an embodiment of the disclosure, the communication interface 110 may receive information about a policy from the server 200 (see FIG. 1) of a policy provider, under the control of the processor 140. The communication interface 110 may provide the information about the policy to the processor 140. The information about the policy may include data such as text, images, or video.

In an embodiment of the disclosure, the communication interface 110 may be connected to an external device through a near field communication scheme such as Bluetooth or Wi-Fi Direct, and receive information about at least one of a location, a time, a space, or an object from the external device.

The camera 120 may be configured to obtain two-dimensional (2D) image data by photographing a real space and part of the user's body (for example, user's hands, arms, or legs). The camera 120 may be implemented in a small form factor to be mounted on the augmented reality device 100, and may be a lightweight RGB camera that consumes low power. However, the disclosure is not limited thereto, and in an embodiment of the disclosure, the camera 120 may be implemented as any type of known camera such as RGB-depth cameras including a depth estimation function, dynamic vision sensor cameras, stereo fisheye cameras, grayscale cameras, or infrared cameras. In an embodiment of the disclosure, the camera 120 may be arranged in a direction toward the user and configured to photograph the user's face.

The camera 120 may include a lens, an image sensor, and an image processor. The camera 120 may obtain, through an image sensor (for example, a complementary metal-oxide-semiconductor (CMOS) or charge-coupled device (CCD)), a still image or video of a real object or part of the user's body. The video may include a plurality of image frames obtained in real time by photographing part of the user's body interacting with the real object. The image processor may encode a still image composed of a single image frame or video data composed of a plurality of image frames obtained through the image sensor, and transfer the encoded image or data to the processor 140.

The sensor 130 may include sensors configured to detect information related to a real space, location, situation, or user's activity. In an embodiment of the disclosure, the sensor 130 may include at least one of a gaze tracking sensor, an Inertial Measurement Unit (IMU) sensor, a heart rate sensor, or a Global Positioning System (GPS) sensor. Detailed descriptions of the sensor 130 are provided in the embodiments shown in FIGS. 5A, 5B, and 11-21.

The processor 140 may execute one or more instructions of a program stored in the memory 150. The processor 140 may include hardware elements for performing arithmetic, logic, input/output operations, and image processing. In FIG. 3, the processor 140 is shown as a single element. However, the disclosure is not limited thereto. In an embodiment of the disclosure, the processor 140 may include a plurality of elements. The processor 140 may be a generic-purpose processor, such as a Central Processing Unit (CPU), Application Processor (AP), or Digital Signal Processor (DSP), a graphics-specific processor such as a Vision Processing Unit (VPU), or a dedicated AI processor such as a Neural Processing Unit (NPU). The processor 140 may control input data to be processed according to predefined operation rules or AI models. When the processor 140 is a dedicated AI processor, the dedicated AI processor may be designed in a hardware structure that is specific to dealing with a particular AI model.

For example, the memory 150 may be configured in a storage medium of at least one type from among a flash memory type, hard disk type, multimedia card micro type, card type memory (Secure Digital (SD) or eXtreme Digital (XD) memory), Random Access Memory (RAM), Static Random Access Memory (SRAM), Read-Only Memory (ROM), Electrically Erasable Programmable Read-Only Memory (EEPROM), Programmable Read-Only Memory (PROM), or optical disk.

The memory 150 may store instructions associated with a function and/or operation for recognizing at least one activity of the user from an image, determining a policy performance level by comparing the at least one activity of the user with at least one activity included in a policy, and outputting a graphic UI for providing a guide for the activity to the user based on the policy performance level. In an embodiment of the disclosure, the memory 150 may store at least one of instructions, algorithm, data structure, program code, or application program, which are readable by the processor 140. The instructions stored in the memory 150 may be implemented in programming or scripting languages such as C, C++, Java, or assembler.

The memory 150 may include instructions, algorithms, data structures, or program codes related to a policy analysis code 152, an activity recognition code 154, a policy performance level determination code 156, and a graphic UI code 158.

In the following embodiment, the processor 140 may be implemented by executing instructions or program codes stored in the memory 150.

The processor 140 may control the communication interface 110 to obtain, from the server 200 (see FIG. 1) of the policy provider, information about a policy including at least one defined activity. In the disclosure, the term "policy" means a set of at least one activity defined by a policy provider to achieve a goal. In an embodiment of the disclosure, the policy may mean information about at least one activity that interacts with at least one of a specific location, time, space, or object and a sequence of performing the at least one activity. In an embodiment of the disclosure, the policy may include information about a reward or penalty set according to policy performance.

In an embodiment of the disclosure, a plurality of policy providers may be present. For example, the processor 140 may receive a user input for selecting any one policy provider from among the plurality of policy providers through hand interaction. The processor 140 may select a policy provided by the selected policy provider, and receive information about the selected policy from a server of the policy provider. However, the disclosure is not limited thereto, and the processor 140 may receive a user input of selecting any one policy from among a plurality of policies provided by the policy provider, and receive, from the server of the policy provider, information about the policy selected based on the received user input.

The policy analysis code 152 may include instructions or program codes associated with a function and/or operation for obtaining, by analyzing the information about the policy received from the policy provider, a plurality of detailed operations for recognizing at least one activity defined by the policy by the augmented reality device 100 and a sequence of the plurality of detailed operations. The processor 140 may analyze text included in the policy, and obtain, based on the analysis result, a plurality of detailed operations for recognizing at least one activity included in the policy and information about a sequence of the plurality of detailed operations by executing the instructions or program codes of the policy analysis code 152. In an embodiment of the disclosure, the policy analysis code 152 may include a natural language understanding (NLU). The processor 140 may compose, from a list storing a plurality of operations trained to be recognizable by the activity recognition code 154, a set of a plurality of detailed operations for recognizing, from an image obtained through the camera 120, at least one activity of the user corresponding to at least one activity included in the policy. For example, when the policy is "quit smoking", the processor 140 may analyze text of "quit smoking" by using an NLU included in the policy analysis code 152, and obtain, based on the analysis result, information about a set of a plurality of detailed operations for recognizing, from the image, the activity of "quit smoking", that is, i) holding a cigarette, ii) lighting a cigarette, and iii) smoking a cigarette. In another example, when the policy is "plastic bottle recycling", the processor 140 may analyze text of "plastic bottle recycling" by using the policy analysis code 152, and obtain, based on the analysis result, information about a set of a plurality of detailed operations for recognizing, from the image, the activity of "recycling plastic bottles", that is, i) holding a plastic bottle, ii) removing a label, and iii) recycling.

However, the disclosure is not limited thereto, and in an embodiment of the disclosure, the policy analysis code 152 may be configured to analyze an image or video to constitute a set of a plurality of detailed operations for recognizing at least one activity included in the policy. For example, the policy analysis code 152 may include an AI model trained to input an image or video and recognize at least one activity or operation. The AI model may be, for example, a Convolutional Neural Network (CNN), but is not limited thereto. For example, when the policy is a video including a plurality of image frames representing recycling plastic bottles, the processor 140 may analyze the image or video by using the AI model included in the policy analysis code 152, and obtain, based on the analysis result, information about a set of a plurality of detailed operations for recognizing the activity of "recycling plastic bottles", that is, i) emptying a plastic bottle, ii) removing a plastic bottle label, and recycling the plastic bottle.

Detailed embodiments of the processor 140 analyzing analyze text, image, or video included in the policy and obtaining a plurality of detailed operations for recognizing at least one activity of the user and information about a sequence of the plurality of detailed operations by executing the instructions or program codes of the policy analysis code 152 are described with reference to FIGS. 6, 7A, 7B, and 7C.

In an embodiment of the disclosure, the memory 150 may not include the policy analysis code 152. In this case, the policy analysis code 152 may be included in an external server or external device, and the external server or external device may analyze the policy, and obtain a plurality of detailed operations and information about a sequence of the plurality of detailed operations so that the augmented reality device 100 may recognize at least one activity defined by the policy. The augmented reality device 100 may obtain, from the external server or external device through the communication interface 110, the information about the plurality of detailed operations and information about the sequence of the plurality of detailed operations.

The activity recognition code 154 may include instructions or program codes associated with a function and/or operation for analyzing, by using an AI model, an image obtained through the camera 120, and recognizing at least one activity of the user. The activity recognition code 154 may include a deep neural network model trained to recognize at least one of a location, time, space, or object from the image, and recognize at least one activity of the user interacting with the recognized at least one of location, time, space, or the object. For example, the deep neural network model may be implemented in at least one of a CNN, RNN, RBM, DBN, BRDNN, or deep Q-network model. For example, the activity recognition code 154 may include panoptic segmentation for obtaining object-specific identification information or activity recognition in egocentric video for recognizing sequential operation or activity from a plurality of image frames, but is not limited thereto.

The processor 140 may recognize at least one activity of the user from the image obtained through the camera 120 by executing the instructions or program codes of the activity recognition code 154.

The policy performance level determination code 156 may include instructions or program codes associated with a function and/or operation for determining a policy performance level of the user by comparing the at least one activity of the user recognized by the activity recognition code 154 with at least one activity included in the policy. The processor 140 may compare the at least one activity of the user recognized from the image with at least one activity defined by the policy, and determine whether the activities correspond to each other based on the comparison result by executing the instructions or program codes of the policy performance level determination code 156. The processor 140 may calculate a value (for example, a score) representing a policy performance level based on whether the at least one activity of the user recognized from the image and the at least one activity defined by the policy correspond to each other. In an embodiment of the disclosure, the processor 140 may recognize user's sequential activity from a plurality of image frames obtained in real time, compare the recognized sequential activity of the user with activities defined by the policy, and update in real time a value representing a policy performance level according to whether the activities correspond to each other based on the comparison result.

When a plurality of policies are received through the communication interface 110, the processor 140 may receive a user input of determining priorities of the plurality of policies. For example, the processor 140 may receive a user input of determining the priorities of the plurality of policies through hand interaction. The processor 140 may determine the priorities of the plurality of policies based on the user input. For example, when the plurality of policies are quit smoking, quit drinking, diet, reading, and running, and a user input of setting the first priority to be diet, the second priority to quit smoking, the third priority to reading, etc., is received, the processor 140 may determine, based on the user input, the priorities of the plurality of policies in the following order: diet → quit smoking → reading. The processor 140 may determine a policy performance level based on the priorities set by the user input. In an embodiment of the disclosure, the processor 140 may compare at least one activity of the user recognized from an image with at least one activity defined by a policy determined as the highest priority from among the plurality of policies for example, diet, to determine a policy performance level of the user. When the at least one activity of the user recognized from the image is completely unrelated to the at least one activity defined by the policy set as the highest priority, for example, diet, the processor 140 may compare the at least one activity of the user with at least one activity defined by a policy set as the second priority (for example, "quit smoking"), to determine the policy performance level of the user. When the at least one activity of the user is not related to the second-priority policy, either, the processor 140 may compare the at least one activity of the user with a policy set as the third priority (for example, "reading") to determine the policy performance level of the user.

In an embodiment of the disclosure, the processor 140 may receive information about at least one of a location, time, space, or object, from an external server or external device through the communication interface 110. The processor 140 may determine the policy performance level of the user by comparing each of the information about at least one of the location, time, space, or object received from the external server or external device and the at least one activity of the user recognized from the image, with a location, time, space, object, and at least one defined activity included in the policy. Detailed embodiments of the processor 140 receiving information from an external server or external device, and comparing the received information and at least one activity of the user recognized from an image with pieces of information defined by the policy and determining a policy performance level of the user are described with reference to FIGS. 8 and 9.

The policy may include at least one activity defined in connection with at least one of a preset location, time, space, or object. In an embodiment of the disclosure, the processor 140 may identify a trigger point by monitoring whether at least one of the location, time, space, object, or at least one activity of the user recognized from the image corresponds to at least one of the location, time, space, object, or at least one defined activity included in the policy. In response to the trigger point being identified, the processor 140 may determine the policy performance level of the user. Detailed embodiments of the processor 140 identifying a trigger point, and determining the policy performance level of the user in response to the trigger point being identified are described with reference to FIGS. 10 to 14.

The graphic UI code 158 may include instructions or program codes associated with a function and/or operation for outputting a graphic UI providing a guide for activity regarding the policy based on a policy performance level. The processor 140 may control the output interface 160 to output a graphic UI corresponding to the policy performance level by executing the instructions or program codes of the graphic UI code 158. In an embodiment of the disclosure, the processor 140 may update the output graphic UI based on the updated policy performance level. For example, when the policy performance level is 0 % or less than a threshold, the policy performance level may control the output interface 160 to output a graphic UI for inducing user's activity. In another example, when the policy performance level exceeds the threshold, the policy performance level may control the output interface 160 to output a graphic UI including text or an icon that cheer for or encourage the user's activity. In another example, when the policy performance level is 100 %, the policy performance level may control the output interface 160 to output a graphic UI representing a result of analyzing the results of the user's activity.

The processor 140 may execute the graphic UI code 158 to control the output interface 160 to output text or an icon representing a reward determined according to the updated policy performance level. In an embodiment of the disclosure, the processor 140 may adjust a brightness of text or an icon representing the reward based on the policy performance level updated in real time. For example, the processor 140 may, when only some of a plurality of activities defined by the policy are performed and the policy performance level is less than a preset threshold, output the brightness of the text or icon representing the reward at less than 50 %, and when the user performs all of the activities included in the policy and the policy performance level is 100 %, output the brightness of the text or icon representing the reward at 100 %.

The output interface 160 may be configured under the control of the processor 140 to output a graphic UI or acoustic signal. The output interface 160 may include the display 162 and the speaker 164.

For example, the display 162 may be configured in at least one of a liquid crystal display, thin-film transistor-liquid crystal display, organic light-emitting diode, flexible display, three-dimensional (3D) display, or electrophoretic display.

In an embodiment of the disclosure, when the augmented reality device 100 is configured in augmented reality glasses, the display 162 may be configured in a lens optical system and may include a waveguide and an optical engine. The optical engine may include a projector configured to generate light of a graphic UI including text, icons, or virtual images, and project the light onto the waveguide. The optical engine may include, for example, an imaging panel, an illumination optical system, a projection optical system, etc. In an embodiment of the disclosure, the optical engine may be disposed in a frame or temples of the augmented reality glasses.

The speaker 164 may be configured to output acoustic signals. In an embodiment of the disclosure, the speaker 164 may output, under the control of the processor 140, a voice message or notification sound determined according to a policy performance level.

FIG. 4 is a flowchart of a method, performed by an augmented reality device 100, of updating a policy performance level according to user's activity and displays a graphic UI based on the updated policy performance level, according to an embodiment of the disclosure.

Operations S410 and S420 in FIG. 4 are obtained by specifying operation S230 shown in FIG. 2. Operation S410 in FIG. 4 may be performed after S220 shown in FIG. 2 is performed. Operation S430 in FIG. 4 is obtained by specifying operation S240 shown in FIG. 2.

In operation S410, the augmented reality device 100 may compare at least one activity recognized in real time from an image with at least one activity defined by a policy to determine whether the activities match with each other. When a plurality of user's activities are recognized from a plurality of image frames continuously obtained over time, the augmented reality device 100 may compare an order in which the plurality of activities are performed with a sequence of a plurality of activities defined by the policy, to determine whether the activities are performed in the same order. In an embodiment of the disclosure, only when the plurality of user's activities recognized in real time from the plurality of image frames are performed in the same order as the sequence of the plurality of activities defined by the policy, the augmented reality device 100 may determine that the activities correspond to each other.

In an embodiment of the disclosure, the augmented reality device 100 may compare a plurality of detailed operations included in at least one activity of the user recognized in real time from the image with a plurality of detailed operations obtained by analyzing the policy, to determine whether the operations correspond to each other.

In operation S420, the augmented reality device 100 may calculate a policy performance level based on whether the operations correspond to each other, to update a value of the policy performance level in real time. The augmented reality device 100 may calculate a value (for example, a score) representing a policy performance level based on whether the at least one activity of the user recognized from the image and the at least one activity defined by the policy correspond to each other. For example, the higher the degree of correspondence, the higher the score representing the policy performance level proportionally, and the lower the degree of correspondence, the lower the score representing the policy performance level. In an embodiment of the disclosure, the augmented reality device 100 may recognize user's sequential activities from a plurality of image frames obtained in real time, compare the recognized sequential activities of the user with activities defined by the policy, and update in real time a value representing a policy performance level according to whether the activities correspond to each other based on the comparison result.

In operation S430, the augmented reality device 100 may a graphic UI representing a reward determined according to the updated policy performance level. The augmented reality device 100 may display text or an icon representing the reward determined according to the updated policy performance level. In an embodiment of the disclosure, the augmented reality device 100 may update a value of reward displayed according to the updated policy performance level. A detailed embodiment of the augmented reality device 100 displaying a graphic UI updated according to a policy performance level is described with reference to FIGS. 5A and 5B.

FIG. 5A is a diagram for describing an operation of an augmented reality device 100 determining a policy performance level by recognizing user's activity according to a reading policy, and outputting a graphic UI 500 for providing guide information for activity according to the policy performance level, according to an embodiment of the disclosure.

Referring to FIG. 5A, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information on a reading policy from the server 200 of a policy provider (for example, a school). For example, the policy information on "reading" may include "reading" as defined activity, and may include reading points according to pages read as a reward. The communication interface 110 may transmit the received policy information to the policy performance level determination code 156.

The camera 120 may obtain an image by photographing an object in a real space and part of the user's body (for example, user's hands, arms, or legs). In the embodiment shown in FIG. 5A, the camera 120 may obtain an image by photographing a book and user's hand holding the book. The camera 120 may provide image data of the obtained image to the activity recognition code 154.

The sensor 130 may include a gaze (eye) tracking sensor 132. The gaze (eye) tracking sensor 132 may be configured as a device for tracking a gaze direction of the user's eyes. The gaze (eye) tracking sensor 132 may detect the gaze direction of the user by detecting an image of the human eye or pupil or by detecting a direction or amount of light reflected from a cornea, such as near-infrared rays. In an embodiment of the disclosure, the gaze (eye) tracking sensor 132 may include a gaze tracking sensor for the left eye and a gaze tracking sensor for the right eye, and may detect a gaze direction of the user's left eye and a gaze direction of the user's right eye, respectively. Detecting the user's gaze direction may include an operation of obtaining gaze information related to the user's gaze. The gaze tracking sensor 132 may provide the gaze information to the activity recognition code 154.

In an embodiment of the disclosure, the gaze tracking sensor 132 may obtain 3D location coordinate information of a gaze point, at which a gaze direction of the user's left eye detected by the gaze tracking sensor for the left eye and a gaze direction of the user's right eye detected by the gaze tracking sensor for the right eye converge. The gaze tracking sensor 132 may provide the 3D location coordinate information of the gaze point to the activity recognition code 154 as the gaze information.

The processor 140 (see FIG. 3) may recognize, from the image and the gaze information, an object and at least one activity of the user interacting with the object by executing the instructions or program codes of the activity recognition code 154. The processor 140 may recognize the object "book" from the image and recognize the user's activity "gazing". In an embodiment of the disclosure, the processor 140 may determine which page of the book the user is gazing based on the 3D location coordinate information of the gaze point obtained by the gaze tracking sensor 132. The activity recognition code 154 may provide information about the object (for example, "book") and the activity (for example, "gazing") to the policy performance level determination code 156.

The processor 140 may determine a policy performance level by comparing at least one activity of the user interacting with the object with activity defined by the policy by executing the instructions or program codes of the policy performance level determination code 156. In the embodiment shown in FIG. 5A, the processor 140 may determine the policy performance level by comparing the user's reading duration and read pages recognized from the image with the duration and number of pages defined by the policy. The processor 140 may calculate a value (for example, a score) representing the policy performance level according to the reading duration and the read pages. The policy performance level determination code 156 may provide, to the graphic UI code 158, the value of the policy performance level calculated according to the reading duration and the read pages.

The processor 140 may control the output interface 160 to output the graphic UI 500 updated according to the policy performance level by executing the instructions or program codes of the graphic UI code 158. In an embodiment of the disclosure, the processor 140 may output the graphic UI 500 representing a reward determined based on the policy performance level. In the embodiment shown in FIG. 5A, the processor 140 may add reading points according to the policy performance level calculated according to the reading duration and the read pages, and output the graphic UI 500 including text representing the added reading points (for example, + 10, + 20, ..., + 100). The graphic UI code 158 may provide, to the output interface 160, data of the graphic UI 500 updated according to the policy performance level.

The output interface 160 may output the graphic UI 500 under the control of the processor 140. In an embodiment of the disclosure, the display 162 may provide, to the user in real time, the graphic UI 500 representing the reading points. However, the disclosure is not limited thereto, and a voice message may be output through the speaker 164 to inform the reading points updated in real time according to the policy performance level.

The graphic UI 500 may be provided in real time to the user 10 through the output interface 160.

FIG. 5B is a diagram for describing an operation of an augmented reality device 100 determining a policy performance level by recognizing user's activity according to a stair climbing policy, and outputting a graphic UI 502 for providing guide information for the activity according to the policy performance level, according to an embodiment of the disclosure.

The embodiment of FIG. 5B is the same as that shown in FIG. 5A, except for the policy (for example, "stair climbing") of the policy provider (for example, "hospital"), determination of the policy performance level, and the graphic UI 502, and redundant descriptions thereof are omitted.

Referring to FIG. 5B, the communication interface 110 may receive policy information on a stair climbing policy from the server 200 of the policy provider (for example, "hospital"). For example, the policy information of "stair climbing" may include activity related to "stairs", that is, "stair climbing", as defined activity, and may include exercise points according to the duration of climbing stairs and the number of floors climbed as rewards. The communication interface 110 may transmit the received policy information to the policy performance level determination code 156.

The camera 120 may obtain an image by photographing a real space and part of the user's body (for example, user's hands, arms, or legs). In the embodiment shown in FIG. 5B, the camera 120 may obtain an image by photographing the stairs and user's legs climbing the stairs. The camera 120 may provide image data of the obtained image to the activity recognition code 154.

The sensor 130 may include a gaze tracking sensor 132. Descriptions of the gaze tracking sensor 132 are the same as those of FIG. 5A, and redundant descriptions are omitted. The gaze tracking sensor 132 may provide the 3D location coordinate information of the gaze point to the activity recognition code 154 as the gaze information.

The processor 140 (see FIG. 3) may recognize, from the image and the gaze information, a space, object, and at least one activity of the user interacting with the space and the object by executing the instructions or program codes of the activity recognition code 154. The processor 140 may recognize, from the image, the object "stairs" located in the space, and recognize "climbing", which is user's activity interacting with the stairs. In an embodiment of the disclosure, the processor 140 may recognize how many floors of the stairs the user is climbing based on the 3D location coordinate information of the gaze point obtained by the gaze tracking sensor 132. The activity recognition code 154 may provide information about the space (for example, "stairs") and the activity (for example, "climbing") to the policy performance level determination code 156.

The processor 140 may determine, by executing the instructions or program codes of the policy performance level determination code 156, a policy performance level by comparing at least one activity of the user interacting with the space and the object with activity defined by the policy. In the embodiment shown in FIG. 5B, the processor 140 may determine the policy performance level by comparing the user's stair climbing duration and the number of climbed floors recognized from the image with the duration and number of floors defined by the policy. The processor 140 may calculate a value (for example, a score) representing the policy performance level according to the stair climbing duration and the number of climbed floors. The policy performance level determination code 156 may provide, to the graphic UI code 158, the value of the policy performance level calculated according to the stair climbing duration and the number of climbed floors.

The processor 140 may control the output interface 160 to output the graphic UI 502 updated according to the policy performance level by executing the instructions or program codes of the graphic UI code 158. In an embodiment of the disclosure, the processor 140 may output the graphic UI 502 representing a reward determined based on the policy performance level. In the embodiment shown in FIG. 5B, the processor 140 may add exercise points according to the policy performance level calculated according to the stair climbing duration and the number of climbed floors, and output the graphic UI 502 including text representing the added exercise points (for example, + 10, + 20, ..., + 100). The graphic UI code 158 may provide, to the output interface 160, data of the graphic UI 502 updated according to the policy performance level.

The output interface 160 may output the graphic UI 502 under the control of the processor 140. In an embodiment of the disclosure, the display 162 may provide, to the user in real time, the graphic UI 502 representing the exercise points. However, the disclosure is not limited thereto, and a voice message may be output through the speaker 164 to inform the exercise points updated in real time according to the policy performance level.

The graphic UI 502 may be provided in real time to the user 10 through the output interface 160.

FIG. 6 is a flowchart of a method, performed by an augmented reality device 100, of analyzing a policy and determining a user's policy performance level based on the policy analysis result, according to an embodiment of the disclosure.

Operation S620 in FIG. 6 is obtained by specifying operation S230 shown in FIG. 2. Operation S620 in FIG. 6 may be performed after S220 shown in FIG. 2 is performed. Operation S630 in FIG. 6 is obtained by specifying operation S240 shown in FIG. 2.

In operation S610, the augmented reality device 100 may analyze text, images, or videos included in the policy, and obtain a plurality of detailed operations for recognizing at least one activity defined by the policy and information about a sequence of the plurality of detailed operations. In an embodiment of the disclosure, the augmented reality device 100 may analyze text included in the policy by using NLU and recognize at least one activity defined by the policy. In an embodiment of the disclosure, the activity recognition code 156 (see FIG. 3) may store a list including a plurality of operations trained to be recognizable by an AI model, and the augmented reality device 100 may obtain, from the list, a set of a plurality of detailed operations for determining whether at least one activity of the user recognized from the image corresponds to the at least one activity defined by the policy. In an embodiment of the disclosure, the augmented reality device 100 may obtain information about an order, that is, a sequence, of performing a plurality of detailed operations for recognizing the at least one activity defined by the policy.

In an embodiment of the disclosure, the augmented reality device 100 may recognize the at least one activity defined by the policy by analyzing an image or video included in the policy by using an AI model trained to recognize an object or activity from an image.

In operation S220, the augmented reality device 100 may recognize at least one activity of the user by analyzing an image obtained through a camera by using an AI model. Operation S220 is the same as operation S220 shown and described in FIG. 2, and redundant descriptions thereof are omitted.

In operation S620, the augmented reality device 100 may determine a policy performance level of the user by comparing the plurality of detailed operations with the at least one activity of the user recognized from the image.

In operation S240, the augmented reality device 100 may display a graphic UI representing a reward determined according to the updated policy performance level. The augmented reality device 100 may display text or an icon representing the reward determined according to the updated policy performance level. In an embodiment of the disclosure, the augmented reality device 100 may adjust a brightness of text or an icon representing the reward based on the policy performance level updated in real time. For example, when the policy performance level is less than a preset threshold, the augmented reality device 100 may output a brightness of text or an icon representing a reward at less than 50 %. For example, when the policy performance level is 100 %, the augmented reality device 100 may output a brightness of text or an icon representing a reward at 100%.

Detailed embodiments of operations S620 and S630 are described with reference to FIGS. 7A to 7C.

FIG. 7A is a diagram for describing an operation of an augmented reality device 100 determining a policy performance level according to user's activity by analyzing a smoking quitting policy, and outputting a graphic UI 700 based on the policy performance level, according to an embodiment of the disclosure.

In the embodiment shown in FIG. 7A, the communication interface 110 and the output interface 160 are the same as those described with reference to FIGS. 3 and 5A, and redundant descriptions thereof are omitted. In an embodiment, functions and/or operations of the augmented reality device 100 may be performed by the processor 140 (see FIG. 3) executing software included in the policy analysis code 152, the activity recognition code 154, the policy performance level determination code 156, and the graphic UI code 158.

Referring to FIG. 7A, the communication interface 110 may receive policy information on a quitting smoking policy from the server 200 of the policy provider (for example, "the Ministry of Health and Welfare" of the government). For example, the policy information of "quit smoking" may include "quit smoking", which is not smoking, as defined activity, and may include health points according to a plurality of detailed operations included in quit smoking as a penalty. The communication interface 110 may transmit the received policy information to the policy analysis code 152.

The processor 140 may execute the instructions or program codes of the policy analysis code 152 to analyze text included in the policy and recognize at least one activity defined by the policy. The processor 140 may analyze the text "quit smoking", and obtain a plurality of detailed operations and a sequence of the plurality of detailed operations so that the augmented reality device 100 may recognize the activity of quitting smoking. In the embodiment shown in FIG. 7A, the processor 140 may generate a set of the extracted detailed operations by extracting detailed operations included in quitting smoking, for example, i) holding a cigarette, ii) lighting the cigarette, and iii) smoking the cigarette, from a list including operations recognizable by the activity recognition code 154. In an embodiment of the disclosure, the processor 140 may obtain information about a penalty related to performance results of the plurality of extracted detailed operations. For example, the processor 140 may obtain penalty information in which - 10 points are displayed at 50 % brightness for a cigarette holding operation, - 10 points are displayed at 80 % brightness when cigarette holding and cigarette lighting operations are performed, and - 10 points are displayed at 100 % brightness when cigarette holding, cigarette lighting, and cigarette smoking operations are all performed.

The policy analysis code 152 may provide, to the policy performance level determination code 156, a plurality of detailed operations included in a quitting smoking operation, a sequence of the plurality of detailed operations, and penalty information for the plurality of detailed operations, obtained as a result of analysis of the quitting smoking policy.

The camera 120 may obtain an image by photographing an object in a real space and part of the user's body (for example, user's hand or arm). In an embodiment of the disclosure, the camera 120 may include a face camera 122 for photographing the user's face. The face camera 122 may have a lens arranged in a direction facing the user, and may obtain a facial image by photographing the user's face. In the embodiment shown in FIG. 7A, the camera 120 may obtain an image by photographing a "cigarette", which is an object in a real space, and user's hand holding the cigarette, and the face camera 122 may obtain a facial image by photographing the user's face holding the cigarette. The camera 120 may provide image data of the obtained image to the activity recognition code 154.

The processor 140 may execute the instructions or program codes of the activity recognition code 154 to recognize, from the image, an object and at least one activity of the user interacting with the object. In the embodiment shown in FIG. 7A, the processor 140 may recognize objects "cigarette" and "lighter" from the facial image, and recognize "holding" and "smoking", which are user's activities interacting with the cigarette and the lighter. The processor 140 may determine whether the operations and the activity correspond to each other by comparing a plurality of detailed operations included in quit smoking activities defined by the quit smoking policy and a sequence of the plurality of detailed operations with the user's activity recognized from the facial image. For example, the processor 140 may recognize, from the facial image, each of holding a cigarette, lighting a cigarette, and smoking a cigarette, and determine whether the activities and the operations correspond to each other by comparing the recognition result with the plurality of detailed operations included in the quit smoking activity. The processor 140 may update a policy performance level based on the determination of whether the activities and the operations correspond to each other. The policy performance level determination code 156 may provide, to the graphic UI code 158, a value of policy performance level updated according to the holding a cigarette, lighting a cigarette, and smoking a cigarette from among the recognized activities of the user.

The processor 140 may control the output interface 160 to output the graphic UI 700 updated according to the policy performance level by executing the instructions or program codes of the graphic UI code 158. In an embodiment of the disclosure, the processor 140 may output the graphic UI 700 representing a penalty determined based on the policy performance level. In the embodiment shown in FIG. 7A, when only some of the plurality of detailed operations included in a quit smoking activity included in the quit smoking policy are performed, the processor 140 may display text or an icon representing a penalty with less than 50 % brightness. For example, when only cigarette holding from among the plurality of detailed operations is performed by the user, the processor 140 may control the display 162 to output a number representing a penalty ("-10") at 50 % brightness. In another example, the display 162 may be controlled to output, when cigarette holding and cigarette lighting operations are performed from among the plurality of operations, a number representing a penalty ("- 10") at 80 % brightness, and to output, when cigarette holding, cigarette lighting, and cigarette smoking operations are all performed, a number representing a penalty ("- 10") at 100 % brightness.

The output interface 160 may output the graphic UI 700 under the control of the processor 140. In an embodiment of the disclosure, the display 162 may provide, to the user in real time, the graphic UI 700 including the number representing the penalty ("-10"). However, the disclosure is not limited thereto, and a voice message may be output through the speaker 164 to inform the penalty updated in real time according to the policy performance level.

The graphic UI 700 may be provided in real time to the user 10 through the output interface 160.

FIG. 7B is a diagram for describing an operation of an augmented reality device 100 determining a policy performance level according to user's activity by analyzing a plastic bottle recycling policy, and outputting a graphic UI 702 based on the policy performance level, according to an embodiment of the disclosure.

The embodiment of FIG. 7B is the same as that shown in FIG. 7A, except for the policy provider (for example, the "Ministry of Environment" of the government), policy (for example, "plastic bottle recycling"), policy analysis, determination of the policy performance level, and the graphic UI 702, and redundant descriptions thereof are omitted.

Referring to FIG. 7B, the communication interface 110 may receive policy information on a plastic bottle recycling policy from the server 200 of the policy provider (for example, "Ministry of Environment" of the government). For example, the policy information of "plastic bottle recycling" may include "plastic bottle recycling" as defined activity, and may include environmental points according to a plurality of detailed operations included in plastic bottle recycling as a reward. The communication interface 110 may transmit the received policy information to the policy analysis code 152.

The processor 140 (see FIG. 3) may analyze text included in the policy and recognize at least one activity defined by the policy by executing the instructions or program codes of the policy analysis code 152. The processor 140 may obtain a plurality of detailed operations and a sequence of the plurality of detailed operations so that the augmented reality device 100 may recognize the activity of recycling plastic bottles by analyzing the text "plastic bottle recycling". In the embodiment shown in FIG. 7B, the processor 140 may generate a set of the extracted detailed operations by extracting detailed operations included in plastic bottle recycling activity, for example, i) holding a plastic bottle, ii) removing a label, and iii) recycling, from a list including operations recognizable by the activity recognition code 154. In an embodiment of the disclosure, the processor 140 may obtain information about a reward related to performance results of the plurality of extracted detailed operations. For example, the processor 140 may obtain reward information in which + 10 points are displayed at 10 % brightness for an operation of holding a plastic bottle, + 10 points are displayed at 90 % brightness when plastic bottle holding and label removal operations are performed, and + 10 points are displayed at 100 % brightness when plastic bottle holding, label removal, and recycling operations are all performed.

The policy analysis code 152 may provide, to the policy performance level determination code 156, a plurality of detailed operations included in a plastic bottle recycling operation, a sequence of the plurality of detailed operations, and penalty information for the plurality of detailed operations, obtained as a result of analysis of the plastic bottle recycling policy.

The camera 120 may obtain an image by photographing an object in a real space and part of the user's body (for example, user's hand or arm). In an embodiment of the disclosure, the camera 120 may include a depth camera 124 for obtaining depth values of an object or part of the user's body. The depth camera 124 may obtain depth values of objects (for example, plastic bottles, labels, etc.) and parts of the user's body (for example, hands).

The processor 140 may recognize, from the image, an object and at least one activity of the user interacting with the object by executing the instructions or program codes of the activity recognition code 154. In the embodiment shown in FIG. 7B, the processor 140 may recognize objects "plastic bottle" and "label" from the facial image, and recognize "holding" and "removing the label", which are user's activities interacting with the plastic bottle and the label. The processor 140 may determine whether the operations and the activity correspond to each other by comparing a plurality of detailed operations included in activities defined by the plastic bottle recycling policy and a sequence of the plurality of detailed operations with the user's activity recognized from the image. For example, the processor 140 may recognize, from the image, each of holding a plastic bottle, removing a label, and recycling, and compare the recognition result with the plurality of detailed operations included in the plastic bottle recycling activity, to determine whether the activities and the operations correspond to each other. The processor 140 may update a policy performance level based on the determination of whether the activities and the operations correspond to each other. The policy performance level determination code 156 may provide, to the graphic UI code 158, a value of policy performance level updated according to the holding a plastic bottle, removing a label, and recycling from among the recognized activities of the user.

The processor 140 may control the output interface 160 to output the graphic UI 702 updated according to the policy performance level by executing the instructions or program codes of the graphic UI code 158. In an embodiment of the disclosure, the processor 140 may output the graphic UI 702 representing a reward determined based on the policy performance level. In the embodiment shown in FIG. 7B, when only some of the plurality of detailed operations included in activity included in the plastic bottle recycling policy are performed, the processor 140 may display text or an icon representing a reward with a preset brightness. For example, when only plastic bottle holding is performed by the user from among the plurality of detailed operations, the processor 140 may control the display 162 to output a number representing a reward ("+ 10") at 10 % brightness. In another example, the display 162 may be controlled to output, when plastic bottle holding and label removal operations are performed from among the plurality of operations, a number representing a penalty ("+ 10") at 90 % brightness, and to output, when plastic bottle holding, label removal, and recycling operations are all performed, a number representing a reward ("+ 10") at 100 % brightness.

The output interface 160 may output the graphic UI 702 under the control of the processor 140. In an embodiment of the disclosure, the display 162 may provide, to the user in real time, the graphic UI 702 including the number representing the reward ("+ 10"). However, the disclosure is not limited thereto, and a voice message may be output through the speaker 164 to inform the reward updated in real time according to the policy performance level.

The graphic UI 702 may be provided in real time to the user 10 through the output interface 160.

FIG. 7C is a diagram for describing an operation of an augmented reality device 100 determining a policy performance level according to user's activity by analyzing a plastic bottle recycling policy, and outputting a graphic UI 704 based on the policy performance level, according to an embodiment of the disclosure.

FIG. 7C is the same as the embodiment shown in FIG. 7B, except for receiving images i₁ to i₃ from the server 200 of the policy provider, the policy analysis code 152 including an AI model 710 for obtaining a plurality of detailed operations included in the policy by analyzing the images i₁ to i₃, and thus, redundant descriptions thereof are omitted.

Referring to FIG. 7C, the communication interface 110 may receive, from the server 200 of the policy provider (for example, the "Ministry of Environment" of the government), a plurality of image frames i₁ to i₃ including policy information on a plastic bottle recycling policy. For example, the first image frame i₁ may be an image of emptying a plastic bottle, the second image frame i₂ may be an image of removing the label of a plastic bottle, and the third image frame i₃ may be an image of crumpling and discarding a plastic bottle. The plurality of image frames i₁to i₃ may be implemented in video data played in chronological order. The communication interface 110 may transmit the plurality of received image frames i₁ to i₃ to the policy analysis code 152.

The processor 140 (see FIG. 3) may analyze the plurality of image frames i₁ to i₃ included in the policy and recognize at least one activity defined by the policy by executing the instructions or program codes of the policy analysis code 152. The processor 140 may input the plurality of image frames i₁ to i₃ to the AI model 710 included in the policy analysis code 152, and obtain a plurality of detailed operations and information about a sequence of the plurality of detailed operations so that activity included in the plastic bottle recycling policy may be recognized by performing inference using the AI model 710. In the embodiment shown in FIG. 7C, the processor 140 may extract a plurality of detailed operations included in the plastic bottle recycling activity as a result of analysis of the plurality of image frames i₁ to i₃, for example, i) emptying a plastic bottle, ii) removing the label, and iii) crumpling and recycling a plastic bottle, and generate a set of the extracted detailed operations. In an embodiment of the disclosure, the processor 140 may obtain information about a reward related to performance results of the plurality of extracted detailed operations. For example, the processor 140 may obtain reward information in which + 10 points are displayed at 10 % brightness for an operation of emptying a plastic bottle, + 10 points are displayed at 90 % brightness when a plastic bottle label removal operation is performed, and + 10 points are displayed at 100 % brightness when plastic bottle emptying, label removal, and crumpling and recycling operations are all performed.

The policy analysis code 152 may provide, to the policy performance level determination code 156, a plurality of detailed operations included in a plastic bottle recycling operation, a sequence of the plurality of detailed operations, and penalty information for the plurality of detailed operations, obtained as a result of analysis of the plastic bottle recycling policy.

The camera 120 may obtain an image by photographing an object in a real space and part of the user's body (for example, a user's hand or arm). In an embodiment of the disclosure, the camera 120 may include a depth camera 124 for obtaining depth values of an object or part of the user's body. The depth camera 124 may obtain depth values of objects (for example, plastic bottles, labels, etc.) and parts of the user's body (for example, hands).

The processor 140 may recognize, from the image, an object and at least one activity of the user interacting with the object by executing the instructions or program codes of the activity recognition code 154. In the embodiment shown in FIG. 7C, the processor 140 may recognize objects "plastic bottle" and "label" from the facial image, and recognize "holding", "emptying", "removing the label", and "crumpling", which are user's activities interacting with the plastic bottle and the label. The processor 140 may determine whether the operations and the activity correspond to each other by comparing a plurality of detailed operations included in activities defined by the plastic bottle recycling policy and a sequence of the plurality of detailed operations with the user's activity recognized from the image. For example, the processor 140 may recognize, from the image, each of emptying a plastic bottle, removing a label, and crumpling and recycling, and compare the recognition result with the plurality of detailed operations included in the plastic bottle recycling activity, to determine whether the activities and the operations correspond to each other. The processor 140 may update a policy performance level based on the determination of whether the activities and the operations correspond to each other. The policy performance level determination code 156 may provide, to the graphic UI code 158, a value of policy performance level updated according to the emptying a plastic bottle, removing the label, and crumpling and recycling from among the recognized activities of the user.

The processor 140 may control the output interface 160 to output the graphic UI 704 updated according to the policy performance level by executing the instructions or program codes of the graphic UI code 158. In an embodiment of the disclosure, the processor 140 may output the graphic UI 704 representing a reward determined based on the policy performance level. The output interface 160 may output the graphic UI 704 under the control of the processor 140. In an embodiment of the disclosure, the display 162 may provide, to the user in real time, the graphic UI 704 including the number representing the reward ("+ 10"). However, the disclosure is not limited thereto, and a voice message may be output through the speaker 164 to inform the reward updated in real time according to the policy performance level.

FIG. 8 is a flowchart of a method, performed by an augmented reality device 100, of receiving information from an external device and determining a policy performance level according to user's activity based on the received information, according to an embodiment of the disclosure.

Operation S820 in FIG. 8 is obtained by specifying operation S230 shown in FIG. 2. Operation S240 shown in FIG. 2 may be performed after operation S820 in FIG. 8 is performed.

In operation S810, the augmented reality device 100 may receive, from an external device, information about at least one of a location, time, space, or object. In an embodiment of the disclosure, the augmented reality device 100 may be connected to an external device through a near field communication scheme such as Bluetooth or Wi-Fi Direct, and receive information about at least one of a location, time, space, or object from the external device.

In operation S820, the augmented reality device 100 may determine the policy performance level by comparing each of the information about at least one of the location, time, space, or object received from the external server or external device and the at least one activity of the user recognized from the image, with a location, time, space, object, and at least one defined activity included in the policy. In an embodiment of the disclosure, the augmented reality device 100 may recognize at least one activity of the user interacting the location, time, space, and object, based on the information about at least one of the location, time, space, or object received from the external device. At least one activity included in the policy may be defined in connection with at least one of a location, time, space, or object. The augmented reality device 100 may recognize, from the image, at least one activity of the user interacting with at least one of a location, time, space, or object, and determine a policy performance level of the user by comparing the at least one recognized activity with at least one activity defined in connection with the at least one of the location, time, space, or object by the policy.

Operation S820 is described in detail with reference to the embodiment shown in FIG. 9.

FIG. 9 is a diagram for describing an operation of an augmented reality device 100 determining a policy performance level by recognizing user's activity according to an abstinence from drinking policy, and outputting a graphic UI 900 for providing guide information for activity according to the policy performance level, according to an embodiment of the disclosure.

Referring to FIG. 9, the augmented reality device 100 may include a communication interface 110, a camera 120, a policy analysis code 152, an activity recognition code 154, a policy performance level determination code 156, a graphic UI code 158, and an output interface 160. The policy analysis code 152, the activity recognition code 154, the policy performance level determination code 156, and the graphic UI code 158 may be implemented in software such as instructions, algorithms, data structures, or program codes stored in the memory 150 (see FIG. 3). The policy analysis code 152, the activity recognition code 154, the policy performance level determination code 156, and the graphic UI code 158 are the same as those shown in FIG. 3, and redundant descriptions thereof are omitted. In an embodiment, functions and/or operations of the augmented reality device 100 may be performed by the processor 140 (see FIG. 3) executing software included in the policy analysis code 152, the activity recognition code 154, the policy performance level determination code 156, and the graphic UI code 158.

The communication interface 110 may receive policy information on the abstinence from drinking policy from the server 200 of a policy provider (for example, a hospital). For example, the policy information of "abstinence from drinking" may include "not drinking alcohol" as defined activity, and may include health points according to the activity of not drinking alcohol as a reward. The communication interface 110 may transmit the received policy information to the policy analysis code 152.

The communication interface 110 may receive object information from an external device 300. In an embodiment of the disclosure, the communication interface 110 may transmit and receive data to and from the external device 300 through near-field wireless communication scheme using pairing using Bluetooth or Wi-Fi Direct. In the embodiment shown in FIG. 9, the communication interface 110 may obtain object information, for example, information about alcohol contained in a tumbler, from the external device 300. The communication interface 110 may transmit, to the activity recognition code 154, the object information (for example, alcohol contained in a tumbler) received from the external device 300.

The processor 140 may analyze text included in the policy and recognize at least one activity defined by the policy by executing the instructions or program codes of the policy analysis code 152. The processor 140 may analyze the text "abstinence from drinking", and obtain a plurality of detailed operations and a sequence of the plurality of detailed operations so that the augmented reality device 100 may recognize the activity of not drinking alcohol. In the embodiment shown in FIG. 9, the processor 140 may extract detailed operations included in abstinence from drinking, for example, i) holding a tumbler (alcohol), and ii) drinking from the tumbler (drinking alcohol), from a list including operations recognizable by the activity recognition code 154, to generate a set of the extracted detailed operations. In an embodiment of the disclosure, the processor 140 may obtain information about a penalty related to performance results of the plurality of extracted detailed operations. For example, the processor 140 may obtain penalty information in which - 10 points are displayed at 50 % brightness for the tumbler (alcohol) holding operation, and - 10 points are displayed at 100 % brightness when the tumbler (alcohol) holding and tumbler (alcohol) drinking operations are all performed.

The camera 120 may obtain an image by photographing an object in a real space and part of the user's body (for example, user's hands, arms, or legs). In the embodiment shown in FIG. 9, the camera 120 may include a face camera 122 for photographing the user's face. The face camera 122 is shown in FIG. 7A is the same as described with reference to FIG. 7A, and redundant descriptions thereof are omitted.

The processor 140 may recognize, from the facial image, at least one activity of the user interacting with an object by executing the instructions or program codes of the activity recognition code 154. In an embodiment of the disclosure, the processor 140 may recognize the object "tumbler containing alcohol" based on the object information received from the external device 300, and recognize the tumbler holding and drinking from tumbler operations, which are user's activities interacting with the object. The activity recognition code 154 may provide information about the object (for example, "tumbler containing alcohol") and the activity (for example, "holding a tumbler" and "drinking from a tumbler") to the policy performance level determination code 156.

The processor 140 may determine a policy performance level by comparing at least one activity of the user interacting with the object with activity defined by the policy by executing the instructions or program codes of the policy performance level determination code 156. In the embodiment shown in FIG. 9, the processor 140 may determine a policy performance level of the user by comparing the user's tumbler (alcohol) holding and drinking from tumbler (drinking alcohol) operations recognized from the image with a plurality of detailed operations analyzed through the policy analysis code 152. When the user activities of holding a tumbler (alcohol) and drinking from a tumbler (drinking alcohol) recognized from the facial image correspond to a plurality of detailed operations included in at least one activity defined by the abstinence from drinking policy, the processor 140 may calculate a value (for example, a score) representing a policy performance level. The policy performance level determination code 156 may provide the policy performance level value to the graphic UI code 158.

The processor 140 may control the output interface 160 to output the graphic UI 500 updated according to the policy performance level by executing the instructions or program codes of the graphic UI code 158. In an embodiment of the disclosure, the processor 140 may output the graphic UI 900 representing a penalty determined based on the policy performance level. In the embodiment shown in FIG. 9, when only some of the plurality of detailed operations included in a not drinking alcohol activity included in the abstinence from drinking policy are performed, the processor 140 may display text or an icon representing a penalty with less than 50 % brightness. For example, when only holding a tumbler (alcohol) is performed from among a plurality of detailed operations recognized in real time from the facial image, the processor 140 may control the display 162 to output a number representing a penalty ("- 10") at 50 % brightness. In another example, when holding a tumbler (alcohol) and drinking from a tumbler (drinking alcohol) are both recognized from among a plurality of detailed operations recognized in real time from the facial image, the processor 140 may control the display 162 to output a number representing a penalty ("- 10") at 100 % brightness.

The output interface 160 may output the graphic UI 900 under the control of the processor 140. In an embodiment of the disclosure, the display 162 may provide, to the user in real time, the graphic UI 900 representing health points. However, the disclosure is not limited thereto, and a voice message may be output through the speaker 164 to inform deduction of health points updated in real time according to the policy performance level.

The graphic UI 900 may be provided in real time to the user 10 through the output interface 160.

FIG. 10 is a flowchart of a method, performed by an augmented reality device 100, of identifying a trigger point for determining a policy performance level based on user's activity, and outputting a graphic UI according to identification of the trigger point, according to an embodiment of the disclosure.

Referring to FIG. 10, operation S1010 may be performed after S220 shown in FIG. 2 is performed.

In operation S1010, the augmented reality device 100 may identify a trigger point by monitoring whether the location, time, space, object, and the user's at least one activity recognized from the image conform to the policy. In an embodiment of the disclosure, the augmented reality device 100 may recognize at least one of a location, time, space, or object from an image obtained through the camera 120 (see FIG. 3) by using an AI model. The augmented reality device 100 may recognize at least one activity of the user interacting with the at least one of the location, time, space, or object recognized by using the AI model. In an embodiment of the disclosure, the policy may include at least one activity defined in connection with at least one of a preset location, time, space, or object. The augmented reality device 100 may identify a trigger point by monitoring whether at least one of the location, time, space, object, or at least one activity of the user recognized from the image corresponds to at least one of a preset location, space, object, or at least one defined activity included in the policy.

In operation S1020, the augmented reality device 100 may determine whether the trigger point is identified.

When the trigger point is identified (operation S1030), the augmented reality device 100 may determine a policy performance level of the user by comparing the at least one activity of the user recognized from the image with the at least one activity included in the policy. In operation S1040, the augmented reality device 100 may output a graphic UI for providing a guide for activity on a policy on the basis of the policy performance level.

Operations S1030 and S1040 are the same as operations S230 and S240 shown in FIG. 2, respectively, and redundant descriptions thereof are omitted.

When the trigger point is not identified (operation S1050), the augmented reality device 100 may not output a graphic UI.

FIG. 11 is a diagram for describing an operation of an augmented reality device 100 determining a policy performance level by recognizing user's activity according to a running policy, and outputting graphic UIs 1104, 1105, and 1106 for providing guide information for activity according to the policy performance level, according to an embodiment of the disclosure.

Referring to FIG. 11, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1100 on the running policy from the server 200 of a policy provider (for example, company/running platform). The policy information 1100 may include a policy goal 1101, a predefined trigger point 1102, a predefined activity 1103, and the graphic UIs 1104, 1105, and 1106 according to a policy performance level. For example, in a "running" policy, the policy information 1100 may include forming a running habit and improving records as the policy goal 1101, may include a running course, which is location information, and a park trail, which is spatial information, as the trigger point 1102, may include a running motion as the predefined activity 1103, and may include, as graphic Uls, a first graphic UI 1104 for inducing participation in running, a second graphic UI 1105 for cheering for running, and a third graphic UI 1106 for analyzing running results. The communication interface 110 may transmit the received policy information 1100 to the policy performance level determination code 156.

The camera 120 may obtain an image by photographing an object in a real space and part of the user's body (for example, user's hands, arms, or legs). In the embodiment shown in FIG. 11, the camera 120 may obtain an image by photographing the park trail, which is a real space, and the user's arms and legs. The camera 120 may provide image data of the obtained image to the activity recognition code 154.

The sensor 130 may include an IMU sensor 134 and a heart rate sensor 136.

The IMU sensor 134 may be a sensor configured to measure a movement speed, direction, angle, and gravitational acceleration of the augmented reality device 100. The IMU sensor 134 may further include an accelerometer, a gyroscope, and a magnetometer. The accelerometer may be a sensor configured to measure acceleration according to a change in motion, when dynamic force such as acceleration force, vibration force, or impulsive force is generated in the augmented reality device 100. In an embodiment of the disclosure, the accelerometer may be configured in a three-axis accelerometer for measuring acceleration in a row direction, lateral direction, and height direction. The gyroscope may be a sensor configured to measure an angular velocity, which is a change in rotation of the augmented reality device 100. In an embodiment of the disclosure, the gyroscope may include a three-axis gyroscope for measuring roll, pitch, and yaw angular velocities. The IMU sensor 134 may provide the measured acceleration and angular velocity values to the activity recognition code 154.

The heart rate sensor 136 may be a sensor configured to measure heart rate of the user. The heart rate sensor 136 may provide a measurement value of heart rate to the activity recognition code 154.

The processor 140 may recognize at least one activity of the user based on the image, the measurement value (acceleration and angular velocity) of the IMU sensor 134, and a heart rate measurement value by executing the instructions or program codes of the activity recognition code 154. The processor 140 may recognize, from the image, "running course", which is location information, "park/trail", which is spatial information, and "running", which is user's activity on the running course of the park/trail.

In operation S1110, the processor 140 may identify a trigger point by comparing the recognized space (for example, "park/trail") and location (for example, "running course) with a location and space of the trigger point 1102 included in the policy information 1100.

When the space (for example, "park/trail") and the location (for example, "running course") correspond to the location and space of the trigger point 1102 included in the policy information 1100, the policy information 1100 may identify the trigger point. When the trigger point is identified (operation S1120), the processor 140 may determine whether user's activity is being performed. When the user's activity is recognized, the processor 140 may determine a policy performance level by comparing at least one activity of the user interacting with a space and location with activity defined by the policy by executing the instructions or program codes of the policy performance level determination code 156.

In operation S1130, the processor 140 may recognize the user's activity, "running", from the image, obtain biometric information (for example, heart rate) based on the heart rate measurement value, and recognize location information (for example, location and speed) based on the measurement values (acceleration and angular velocity) of the IMU sensor 134. The processor 140 may recognize that the user is performing the activity (for example, "running") based on the recognition result. In this case, the processor 140 may control the output interface 160 to output a graphic UI corresponding to an operation in which the activity is being performed by executing the instructions or program codes of the graphic UI code 158. In an embodiment of the disclosure, the processor 140 may control the display 162 to display the second graphic UI 1105 for cheering for running.

In operation S1140, the processor 140 may determine whether the user's activity has ended (for example, "stopped running") by executing the policy performance level determination code 156. For example, when the user's activity is ended, the heart rate is lower than a threshold, the location is constant, and the speed is 0, the processor 140 may determine that the user's activity has ended.

In operation S1150, the processor 140 may determine a graphic UI to be output, according to a result of the determination of whether the user's activity has ended. When the user's activity has not ended, the processor 140 may control the display 162 to display the first graphic UI 1104 for inducing participation in running by executing the graphic UI code 158. When the user's activity has ended, the processor 140 may control the display 162 to display the third graphic UI 1106 for analyzing the results of running by executing the graphic UI code 158.

When the trigger point is not identified in operation S1110, the processor 140 may control the output interface 160 not to output a graphic UI.

The output interface 160 may output the graphic Uls 1104, 1105, and 1106 under the control of the processor 140. In an embodiment of the disclosure, the display 162 may display the graphic UIs 1104, 1105, and 1106 corresponding to the policy performance level updated in real time according to the user's activity. However, the disclosure is not limited thereto, and depending on the policy performance level updated in real time, a voice message for inducing the user to participate in running, cheering for running, or analyzing the results may be output through the speaker 164.

The graphic Uls 1104, 1105, and 1106 may be provided in real time to the user 10 through the output interface 160.

FIG. 12 is a diagram for describing an operation of an augmented reality device 100 determining a policy performance level by recognizing user's activity according to a remote lecture concentration policy, and outputting graphic Uls 1204 and 1205 for providing guide information for activity according to the policy performance level, according to an embodiment of the disclosure.

Referring to FIG. 12, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1200 on the remote lecture concentration policy from the server 200 of a policy provider (for example, company/remote lecture). The policy information 1200 may include a policy goal 1201, a predefined trigger point 1202, a predefined activity 1203, and the graphic Uls 1204 and 1205 according to a policy performance level. For example, in a "remote lecture concentration" policy, the policy goal 1201 may include remote lecture concentration and learning efficiency improvement as the policy goals 1201, may include connection with an external image devices, situation recognition, and microphone recognition as the trigger points 1202, may include an operation of not concentrating on the lecture as the predefined activity 1203, and may include, as the graphic Uls, the first graphic UI 1204 representing an environment in which concentration is possible, and the second graphic UI 1205 for calling attention. The communication interface 110 may transmit the received policy information 1200 to the policy performance level determination code 156.

The camera 120 may obtain an image by photographing an object in a real space and part of the user's body (for example, user's hands, arms, or legs). In the embodiment shown in FIG. 12, the camera 120 may obtain an image by photographing a lecture device, which is an object in a real space. The camera 120 may provide image data of the obtained image to the activity recognition code 154.

The sensor 130 may include a gaze tracking sensor 132 and a microphone 138. The gaze tracking sensor 132 is shown in FIGS. 5A and 5B, and is the same as described with reference to FIGS. 5A and 5B, and redundant descriptions thereof are omitted. The gaze tracking sensor 132 may provide the gaze information of the user to the activity recognition code 154.

The microphone 138 is configured to receive sound from an environment or external device, and convert the received sound to an acoustic signal. In the embodiment shown in FIG. 12, the microphone 138 may receive lecture audio output from the lecture device, and provide the received lecture audio to the activity recognition code 154.

The processor 140 may recognize at least one activity of the user based on the image, the gaze information, and the lecture audio by executing the instructions or program codes of the activity recognition code 154. The processor 140 may recognize the object "lecture device" from the image, recognize the lecture audio, and recognize user's activity of concentrating on the lecture based on the gaze information.

In operation S1210, the processor 140 may identify a trigger point by comparing the recognized object (for example, "lecture device") and audio (for example, "lecture audio") with an external imaging device and audio of the trigger point 1202 included in the policy information 1200.

When the object (for example, "lecture device") and the audio (for example, "lecture audio") correspond to an object and audio of the trigger point 1202 included in the policy information 1200, the policy information 1200 may identify a trigger point. When the trigger point is identified (operation S1220), the processor 140 may control the output interface 160 to output the first graphic UI 1204 providing an environment in which concentration is possible by executing the instructions or program codes of the graphic UI code 158.

In operation S1230, the processor 140 may determine whether the user is concentrating on the lecture. In the embodiment shown in FIG. 12, the processor 140 may recognize the user activity, "concentrating on the lecture", from the image, and determine whether the user gazes at the lecture device based on the gaze information measured from the gaze tracking sensor 132. The processor 140 may determine a policy performance level by comparing at least one activity of the user interacting with the object and the audio with activity defined by the policy by executing the instructions or program codes of the policy performance level determination code 156. For example, the processor 140 may recognize the user's lecture concentration activity, gaze tracking information (biometric information), and factors that interfere with concentration, and determine a policy performance level based on the recognition result. The policy performance level determination code 156 may provide information about the policy performance level to the graphic UI code 158.

When it is determined that the user is concentrating on the lecture, the processor 140 may control the display 162 to display the first graphic UI 1204 providing an environment in which concentration is possible by executing the graphic UI code 158. When it is determined that the user is not concentrating on the lecture, the processor 140 may control the display 162 to display the second graphic UI 1205 for calling attention by executing the graphic UI code 158.

When the trigger point is not identified in operation S1210, the processor 140 may control the output interface 160 not to output a graphic UI.

The output interface 160 may output the graphic Uls 1204 and 1205 under the control of the processor 140. In an embodiment of the disclosure, the display 162 may display the graphic Uls 1204 and 1205 corresponding to the policy performance level updated in real time according to whether the user concentrates on the lecture. However, the disclosure is not limited thereto, and depending on the policy performance level updated in real time, a voice message or acoustic signal for inducing the user to concentrate on the lecture or calling attention may be output through the speaker 164.

The graphic Uls 1204 and 1205 may be provided in real time to the user 10 through the output interface 160.

FIG. 13 is a diagram for describing an operation of an augmented reality device 100 determining a policy performance level by recognizing user's activity according to a diet policy, and outputting a graphic UI 1304 for providing guide information for activity according to the policy performance level, according to an embodiment of the disclosure.

Referring to FIG. 13, the augmented reality device 100 may include a communication interface 110, a camera 120, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1300 on the diet policy from the server 200 of a policy provider (for example, the Ministry of Health and Welfare of the government). The policy information 1300 may include a policy goal 1301, a predefined trigger point 1302, predefined activity 1303, a graphic UI 1304, and a penalty 1305 according to a policy performance level. For example, in the "diet" policy, the policy information 1300 may include diet as the policy goal 1301, may include Coke (object) as the trigger point 1302, may include a motion of drinking Coke as the predefined activity 1303, may include the graphic UI 1304 encouraging diet as the graphic UI, and may include, when activity of drinking Coke is performed, information about deduction of health points as the penalty. The communication interface 110 may transmit the received policy information 1300 to the policy performance level determination code 156.

The communication interface 110 may receive object information from an external device 300. In an embodiment of the disclosure, the communication interface 110 may transmit and receive data to and from the external device 300 through a nearfield communication scheme such as Bluetooth or Wi-Fi Direct. In the embodiment shown in FIG. 13, the communication interface 110 may obtain, from the external device 300, information about "Coke" as object information. The communication interface 110 may transmit, to the activity recognition code 154, the object information (for example, Coke) received from the external device 300.

The camera 120 may be configured to obtain an image by photographing an object and part of the user's body (for example, hands, arms, legs, etc.). The camera 120 may include the face camera 122 for obtaining an image by photographing the user's face. The face camera 122 is shown in FIG. 7A is the same as described with reference to FIG. 7A, and redundant descriptions thereof are omitted. The camera 120 may provide image data of the obtained image to the activity recognition code 154.

The processor 140 may recognize at least one activity of the user based on the image and the object information by executing the instructions or program codes of the activity recognition code 154. In the embodiment shown in FIG. 13, the processor 140 may recognize the user's face from the image, and recognize the object "Coke" based on object information received from the external device 300.

In operation S1310, the processor 140 may identify a trigger point by comparing the recognized object (for example, "Coke") with an object of the trigger point 1302 included in the policy information 1300.

When the object (for example, "Coke") corresponds to the object of the trigger point 1302 included in the policy information 1300, the policy information 1300 may identify a trigger point. When the trigger point is identified, the processor 140 may determine the policy performance level by comparing the user's activity with the activity 1303 defined by the policy information 1300 by executing the instructions or program codes of the policy performance level determination code 156.

In operation S1320, the processor 140 may compare activity (for example, "grab") through an activity subject (for example, "hand") and an object (for example, "Coke") with the activity 1303 defined by the policy information 1300, and recognize that it is an activity preparation stage. In this case, the processor 140 may control the output interface 160 to output the graphic UI 1304 for encouraging diet by executing the instructions or program codes of the graphic UI code 158.

In operation S1330, the processor 140 may compare activity (for example, "drinking") through an activity subject (for example, "hand" or "mouth") and an object (for example, "Coke") with the activity 1303 defined by the policy information 1300, and recognize that it is an activity performance stage. In this case, the processor 140 may control the output interface 160 not to output a graphic UI by executing the instructions or program codes of the graphic UI code 158.

When the trigger point is not identified in operation S1310, the processor 140 may control the output interface 160 not to output a graphic UI.

The output interface 160 may output the graphic UI 1304 under the control of the processor 140. In an embodiment of the disclosure, the display 162 may display the graphic UI 1304 encouraging the user to diet, based on the policy performance level updated in real time according to the user's activity. However, the disclosure is not limited thereto, and depending on the policy performance level updated in real time, a voice message for inducing the user 10 not to drink Coke or encouraging diet may be output through the speaker 164.

FIG. 14 is a diagram for describing an operation of an augmented reality device 100 determining a policy performance level by recognizing user's activity according to a diet policy, and outputting a graphic UI 1404 for providing guide information for activity according to the policy performance level, according to an embodiment of the disclosure.

Referring to FIG. 14, the augmented reality device 100 may include a communication interface 110, a camera 120, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1400 on the diet policy from the server 200 of a policy provider (for example, the Ministry of Health and Welfare of the government). The policy information 1400 may include a policy goal 1401, a predefined trigger point 1402, predefined activity 1403, a graphic UI 1404, and a reward 1405 according to a policy performance level. For example, in the "diet" policy, the policy information 1400 may include diet as the policy goal 1401, may include jogging (activity or location) as the trigger point 1402, may include running as the predefined activity 1403, may include the graphic UI 1404 encouraging diet as the graphic UI, and may include information about additional health points as the reward. The communication interface 110 may transmit the received policy information 1400 to the policy performance level determination code 156.

The communication interface 110 may receive object information from an external device 300. In an embodiment of the disclosure, the communication interface 110 may transmit and receive data to and from the external device 300 through a nearfield communication scheme such as Bluetooth or Wi-Fi Direct. In the embodiment shown in FIG. 14, the communication interface 110 may obtain, from the external device 300, information about the "treadmill" as object information. The communication interface 110 may transmit, to the activity recognition code 154, the object information (for example, a treadmill) received from the external device 300.

The camera 120 may be configured to obtain an image by photographing part of the user's body (for example, hands, arms, legs, feet, etc.). The camera 120 may provide image data of the obtained image to the activity recognition code 154.

The processor 140 may recognize at least one activity of the user based on the image and the object information by executing the instructions or program codes of the activity recognition code 154. In the embodiment shown in FIG. 14, the processor 140 may recognize body parts, such as the user's hands and feet, from the image, and recognize the object "treadmill" based on object information received from the external device 300.

In operation S1410, the processor 140 may identify a trigger point by comparing user's activity (for example, "running") interacting with the recognized object (for example, "treadmill") with an object and activity of the trigger point 1402 included in the policy information 1400.

When the object (for example, "treadmill") and the user's activity (for example, "running") correspond to the object and activity of the trigger point 1402 included in the policy information 1400, the policy information 1400 may identify a trigger point. When the trigger point is identified, the processor 140 may determine the policy performance level by comparing the user's activity with the predefined activity 1403 defined by the policy information 1400 by executing the instructions or program codes of the policy performance level determination code 156.

In operation S1420, the processor 140 may compare activity (for example, "walking") through an activity subject (for example, "hand" or "feet") and an object (for example, "treadmill") with the activity 1403 defined by the policy information 1400, and recognize that it is an activity preparation stage. In this case, the processor 140 may control the output interface 160 to output the graphic UI 1404 for encouraging diet by executing the instructions or program codes of the graphic UI code 158.

In operation S1430, the processor 140 may compare activity (for example, "running") through an activity subject (for example, "hand" or "feet") and an object (for example, "treadmill") with the activity 1403 defined by the policy information 1400, and recognize that it is an activity performance stage. When it is recognized that the activity is being performed, the processor 140 may control the output interface 160 not to output the graphic UI 1404 by executing the graphic UI code 158.

When the trigger point is not identified in operation S1410, the processor 140 may control the output interface 160 not to output a graphic UI.

The output interface 160 may output the graphic UI 1404 under the control of the processor 140. In an embodiment of the disclosure, the display 162 may display the graphic UI 1404 encouraging the user to diet, based on the policy performance level updated in real time according to the user's activity. However, the disclosure is not limited thereto, and depending on the policy performance level updated in real time, a voice message for cheering for running or encouraging diet may be output through the speaker 164.

FIG. 15 is a diagram for describing an operation of an augmented reality device 100 determining a policy performance level by recognizing user's activity according to a policy of increasing advertisement exposure frequency, and outputting a graphic UI 1504 for providing guide information for activity according to the policy performance level, according to an embodiment of the disclosure.

Referring to FIG. 15, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1500 on an increase in advertisement exposure frequency from the server 200 of a policy provider (for example, a sporting merchandise company). The policy information 1500 may include a policy goal 1501, a predefined trigger point 1502, a predefined activity 1503, and a graphic UI 1504 according to a policy performance level. For example, in the "increase in advertisement exposure frequency" policy may include an increase in advertisement exposure as the policy goal 1501, may include an advertisement (object) as the trigger point 1502, may include an advertisement gazing operation as the predefined activity 1503, and information about the advertisement graphic UI 1504 as the graphic UI. The communication interface 110 may transmit the received policy information 1500 to the policy performance level determination code 156.

The camera 120 may obtain an image by photographing an object in a real space and part of the user's body (for example, user's hands, arms, or legs). In the embodiment shown in FIG. 15, the camera 120 may obtain an image by photographing an advertisement, which is an object in a real space. The camera 120 may provide image data of the obtained image to the activity recognition code 154.

The sensor 130 may include a gaze tracking sensor 132. The gaze tracking sensor 132 is shown in FIGS. 5A and 5B, and is the same as described with reference to FIGS. 5A and 5B, and redundant descriptions thereof are omitted. The gaze tracking sensor 132 may provide the gaze information of the user to the activity recognition code 154.

The processor 140 may recognize at least one activity of the user based on the image and the gaze information by executing the instructions or program codes of the activity recognition code 154. The processor 140 may recognize the object "advertisement" from the image, and recognize the user's activity of gazing at the advertisement based on the gaze information. The activity recognition code 154 may provide information about the object (for example, "advertisement") and the activity (for example, "gazing") to the policy performance level determination code 156.

The processor 140 may determine a policy performance level by comparing at least one activity of the user interacting with the object with activity defined by the policy by executing the instructions or program codes of the policy performance level determination code 156. In the embodiment shown in FIG. 15, the processor 140 may compare the advertisement, which is the object recognized from the image, and the number, duration, and pattern of the user's gaze recognized based on the gaze information with the activity 1503 defined by the policy information 1500, and calculate a value (for example, "score") representing a policy performance level based on whether correspondence has been made. The policy performance level determination code 156 may provide, to the graphic UI code 158, the value of the policy performance level calculated according to the user's advertisement gazing activity.

The processor 140 may control the output interface 160 to output the graphic UI 1504 updated according to the policy performance level by executing the instructions or program codes of the graphic UI code 158. In the embodiment shown in FIG. 15, when the user's activity is to not gaze at the advertisement and then gaze at the advertisement, the processor 140 may control the display 162 to display the graphic UI 1504. When the user's activity is to gaze at the advertisement and then no longer gaze at the advertisement, the processor 140 may control the display 162 not to output the graphic UI 1504.

The graphic UI 1504 may be provided in real time to the user 10 through the output interface 160.

FIG. 16 is a diagram for describing an operation of an augmented reality device 100 determining a policy performance level by recognizing user's activity according to a product sales inducement policy, and outputting a graphic UI 1604 for providing guide information for activity according to the policy performance level, according to an embodiment of the disclosure.

Referring to FIG. 16, the augmented reality device 100 may include a communication interface 110, a camera 120, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1600 on the product sales inducement policy from the server 200 of a policy provider (for example, a sporting merchandise company). The policy information 1600 may include a policy goal 1601, a predefined trigger point 1602, a predefined activity 1603, and a graphic UI 1604 according to a policy performance level. For example, in the "product sales inducement" policy, the policy information 1600 may include inducing product sales as the policy goal 1601, may include a product for sale (object) as the trigger point 1602, may include adding to cart as the predefined activity 1603, and may include information about a payment graphic UI as the graphic UI 1604. The communication interface 110 may transmit the received policy information 1600 to the policy performance level determination code 156.

The camera 120 may obtain an image by photographing a real space, an object in the real space, and part of the user's body (for example, user's hands, arms, or legs). In the embodiment shown in FIG. 16, the camera 120 may obtain an image by photographing a cash register as a real space, a product for sale as an object, and a user's hand adding the product for sale to a cart. The camera 120 may provide image data of the obtained image to the activity recognition code 154.

The processor 140 may recognize, from the image, a space and at least one activity of the user interacting with the object by executing the instructions or program codes of the activity recognition code 154. The processor 140 may recognize, from the image, a "cash register" as a space and a "product for sales" as an object, and recognize the user's activity of "adding the product for sales to the cart at the cash register". The activity recognition code 154 may provide, to the policy performance level determination code 156, information about a space (for example, "cash register"), an object (for example, "product for sales"), and activity (for example, "adding to cart").

The processor 140 may determine a policy performance level by comparing at least one activity of the user interacting with the space and the object with activity defined by the policy by executing the instructions or program codes of the policy performance level determination code 156. In the embodiment shown in FIG. 16, the processor 140 may compare the user's activity of adding a product for sales to a cart at a cash register, interacting with the space and object recognized from the image, with the activity 1603 defined by the policy information 1600, and calculate a value (for example, "score") representing a policy performance level based on whether correspondence has been made. The policy performance level determination code 156 may provide, to the graphic UI code 158, the value of the policy performance level calculated according to the user's activity.

The processor 140 may control the output interface 160 to output the graphic UI 1604 updated according to the policy performance level by executing the instructions or program codes of the graphic UI code 158. In the embodiment shown in FIG. 16, when the user's activity of adding a product for sales to a cart near a cash register, the processor 140 may control the display 162 to display the payment graphic UI 1604. When the user is not around the cash register or the user's activity is not to add the product for sales to the cart, the processor 140 may control the display 162 not to display the graphic UI 1604.

The payment graphic UI 1604 including guide information for inducing the user 10 to purchase a product may be provided to the user 10 through the output interface 160.

FIG. 17 is a diagram for describing an operation of an augmented reality device 100 determining a policy performance level by recognizing user's activity according to a book recommendation policy, and outputting a graphic UI 1704 for providing guide information for activity according to the policy performance level, according to an embodiment of the disclosure.

Referring to FIG. 17, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1700 on the book recommendation policy from the server 200 of a policy provider (for example, a book club). The policy information 1700 may include a policy goal 1701, a predefined trigger point 1702, a predefined activity 1703, and a graphic UI 1704 according to a policy performance level. For example, in the "book recommendation" policy, the policy information 1700 may include a new book recommendation as the policy goal 1701, may include a book cover (object) as the trigger point 1702, may include gazing at a page within a book as the predefined activity 1703, and may include information about a book recommendation graphic UI as the graphic UI 1704. The communication interface 110 may transmit the received policy information 1700 to the policy performance level determination code 156.

The camera 120 may obtain an image by photographing an object in a real space and part of the user's body (for example, user's hands, arms, legs, etc.). In the embodiment shown in FIG. 17, the camera 120 may obtain an image by photographing the book cover and the user's hand holding the book cover. The camera 120 may provide image data of the obtained image to the activity recognition code 154.

The sensor 130 may include a gaze tracking sensor 132. Descriptions of the gaze tracking sensor 132 are the same as those of FIG. 5A, and redundant descriptions are omitted. The gaze tracking sensor 132 may provide the 3D location coordinate information of the gaze point to the activity recognition code 154 as the gaze information.

The processor 140 may recognize, from the image, an object and at least one activity of the user interacting with the object by executing the instructions or program codes of the activity recognition code 154. The processor 140 may recognize the object "book cover" from the image, and recognize the user's activity of "gazing at a page within a book" based on three-dimensional position coordinates of a gaze point obtained from the gaze tracking sensor 132. The activity recognition code 154 may provide information about the object (for example, "book cover") and the activity (for example, "gazing at a page within a book") to the policy performance level determination code 156.

The processor 140 may determine a policy performance level by comparing the object and at least one activity of the user interacting with the object with activity defined by the policy by executing the instructions or program codes of the policy performance level determination code 156. In the embodiment shown in FIG. 17, the processor 140 may compare a book page recognized from the image and the user's activity of gazing at the book page with the activity 1703 defined by the policy information 1700, and calculate a value (for example, "score") representing a policy performance level based on whether correspondence has been made. The policy performance level determination code 156 may provide, to the graphic UI code 158, the value of the policy performance level calculated according to the user's activity.

The processor 140 may control the output interface 160 to output the graphic UI 1704 updated according to the policy performance level by executing the instructions or program codes of the graphic UI code 158. In the embodiment shown in FIG. 17, when book reading is completed or a book recommendation page is turned on, the processor 140 may control the display 162 to display the book recommendation graphic UI 1704. When the book recommendation page is turned off, the processor 140 may control the display 162 not to display the book recommendation graphic UI 1704.

The book recommendation graphic UI 1704 may be provided to the user 10 through the output interface 160.

FIG. 18 is a diagram for describing an operation of an augmented reality device 100 determining a policy performance level by recognizing user's activity according to an old road reporting policy, and outputting a graphic UI 1804 for providing guide information for activity according to the policy performance level, according to an embodiment of the disclosure.

Referring to FIG. 18, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1800 on the old road reporting policy from the server 200 of a policy provider (for example, the Ministry of Land, Infrastructure and Transport of the government). The policy information 1800 may include a policy goal 1801, a predefined trigger point 1802, a predefined activity 1803, and a graphic UI 1804 according to a policy performance level. For example, in the "old road reporting" policy, the policy information 1800 may include reporting old roads as the policy goal 1801, may include old roads (objects) as the trigger point 1802, may include finding old roads as the predefined activity 1803, and may include information about a report webpage graphic UI as the graphic UI 1804. The communication interface 110 may transmit the received policy information 1800 to the policy performance level determination code 156.

The camera 120 may obtain an image by photographing an object in a real space and part of the user's body (for example, user's hands, arms, or legs). In the embodiment shown in FIG. 18, the camera 120 may obtain an image by photographing an old road. The camera 120 may provide image data of the obtained image to the activity recognition code 154.

The sensor 130 may include a GPS sensor 139. The GPS sensor 139 may obtain location information about a current location of the user. The GPS sensor 139 may provide the location information to the activity recognition code 154.

The processor 140 may recognize, from the image, an object and at least one activity of the user interacting with the object by executing the instructions or program codes of the activity recognition code 154. The processor 140 may recognize the object "old road" from the image, recognize a location at which an old road is present based on the location information obtained from the GPS sensor 139, and recognize user's activity of finding an old road from the image. The activity recognition code 154 may provide, to the policy performance level determination code 156, information about the object (for example, "old road"), location (for example, "location of an old road"), and user's activity (for example, "finding an old road").

The processor 140 may determine a policy performance level by comparing the object and at least one activity of the user interacting with the location with activity defined by the policy by executing the instructions or program codes of the policy performance level determination code 156. In the embodiment shown in FIG. 18, the processor 140 may compare an old road recognized from the image and the user's activity of finding an old road interacting with location of the old road with the activity 1803 defined by the policy information 1800, and calculate a value (for example, "score") representing a policy performance level based on whether correspondence has been made. The policy performance level determination code 156 may provide, to the graphic UI code 158, the value of the policy performance level calculated according to the user's activity.

The processor 140 may control the output interface 160 to output the graphic UI 1804 updated according to the policy performance level by executing the instructions or program codes of the graphic UI code 158. In the embodiment shown in FIG. 18, when a policy performance level is higher than a preset threshold, the graphic UI code 158 may control the display 162 to display the report webpage graphic UI 1804 by executing the graphic UI code 158. When the report webpage is turned off, the processor 140 may control the display 162 not to display a graphic UI.

The report webpage graphic UI 1804 for providing an old road reporting guide may be output to the user 10 through the output interface 160.

FIG. 19 is a diagram for describing an operation of an augmented reality device 100 determining a policy performance level by recognizing user's activity according to a travel memory provision policy, and outputting a graphic UI 1904 for providing guide information for activity according to the policy performance level, according to an embodiment of the disclosure.

Referring to FIG. 19, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 1900 on the travel memory provision policy from the server 200 of a policy provider (for example, a travel destination). The policy information 1900 may include a policy goal 1901, a predefined trigger point 1902, a predefined activity 1903, and a graphic UI 1904 according to a policy performance level. For example, in the "travel memory provision" policy, the policy information 1900 may include recalling travel memories as the policy goal 1901, may include previous travel destinations (location, space, or weather) as the trigger point 1902, may include previous travel destination information (past record information) as the predefined activity 1903, and may include information about a previous travel destination information graphic UI as the graphic UI 1904. The communication interface 110 may transmit the received policy information 1900 to the policy performance level determination code 156.

The camera 120 may obtain an image by photographing a real space and part of the user's body (for example, user's hands, arms, legs, etc.). In the embodiment shown in FIG. 19, the camera 120 may obtain an image by photographing a travel destination. The camera 120 may provide image data of the obtained image to the activity recognition code 154.

The sensor 130 may include a GPS sensor 139. The GPS sensor 139 may obtain location information about a current location of the user. The GPS sensor 139 may provide the location information to the activity recognition code 154.

The processor 140 may recognize, from the image, a space and at least one activity of the user interacting with the space by executing the instructions or program codes of the activity recognition code 154. The processor 140 may recognize the "previous travel destination" obtained based on the location information obtained through the image and the GPS sensor 139, and recognize the temperature, humidity, and weather of the previous travel destination. The activity recognition code 154 may provide, to the policy performance level determination code 156, the location information (for example, "previous travel destination") and the information about the temperature, humidity, or weather (for example, "the temperature, humidity, and weather of the previous travel destination").

The processor 140 may determine a policy performance level by comparing at least one activity of the user interacting with the location with activity defined by the policy by executing the instructions or program codes of the policy performance level determination code 156. In the embodiment shown in FIG. 19, the processor 140 may compare the recognized previous travel destination and temperature, humidity, and weather of the previous travel destination with the activity 1903 defined by the policy information 1900, and calculate a value (for example, "score") representing a policy performance level based on whether correspondence has been made. The policy performance level determination code 156 may provide the calculated value of the policy performance level to the graphic UI code 158.

The processor 140 may control the output interface 160 to output the graphic UI 1904 updated according to the policy performance level by executing the instructions or program codes of the graphic UI code 158. In the embodiment shown in FIG. 19, when the current location information is similar to the previous travel destination information and the value of the policy performance level is higher than the preset threshold, the processor 140 may control the display 162 to display the graphic UI 1904 representing the previous travel destination information by executing the graphic UI code 158 and. When current location information is not similar to the previous travel destination information, the processor 140 may control the display 162 not to display a graphic UI.

The graphic UI 1904 for providing the previous travel destination information may be provided to the user 10 through the output interface 160.

FIG. 20 is a diagram for describing an operation of an augmented reality device 100 determining a policy performance level by recognizing user's activity according to yoga policy, and outputting a graphic UI 2004 for providing guide information for activity according to the policy performance level, according to an embodiment of the disclosure.

Referring to FIG. 20, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 2000 on yoga from the server 200 of a policy provider (for example, the Ministry of Ministry of Culture, Sports and Tourism of the government). The policy information 2000 may include a policy goal 2001, a predefined trigger point 2002, predefined activity 2003, a graphic UI 2004 according to a policy performance level, and information about a penalty 2005. For example, in the "yoga" policy, the policy information 2000 may include diet, flexibility, and body balance as the policy goal 2001, may include a relative location as the trigger point 2002, may include an inaccurate posture as the predefined activity 2003, may include the yoga posture graphic UI 2004, and may include information about the penalty 2005 regarding point deduction. The communication interface 110 may transmit the received policy information 2000 to the policy performance level determination code 156.

The communication interface 110 may receive object information from an external device 300. In an embodiment of the disclosure, the communication interface 110 may transmit and receive data to and from the external device 300 through a nearfield communication scheme such as Bluetooth or Wi-Fi Direct. In the embodiment shown in FIG. 20, the external device 300 may be a camera of a yoga academy, and the communication interface 110 may obtain object information from the camera of the yoga academy. For example, the object information may include information about a user's head, arms, legs, etc. photographed by the camera of the yoga academy. The communication interface 110 may transmit, to the activity recognition code 154, the object information (for example, user's head, arms, legs, etc.) received from the external device 300.

The camera 120 may obtain an image by photographing a real space and part of the user's body (for example, user's head, hands, arms, legs, etc.). In the embodiment shown in FIG. 20, the camera 120 may obtain an image by photographing the user's head, arms, legs, etc. in the yoga academy. The camera 120 may provide image data of the obtained image to the activity recognition code 154.

The sensor 130 may include the microphone 138 and the GPS sensor 139. For example, the microphone 138 may receive a voice of the yoga instructor, and provide the received voice signal to the activity recognition code 154. For example, the GPS sensor 139 may obtain a current location of the user, for example, location information of the yoga academy, and provide the obtained location information to the activity recognition code 154.

The processor 140 may recognize, from the image, a location and at least one activity of the user interacting with the object by executing the instructions or program codes of the activity recognition code 154. The processor 140 may recognize the user's head, arms, legs, etc. from the image, and recognize a yoga posture of the user based on the recognized head, arms, and legs.

In operation S2010, the processor 140 may compare information of the trigger point 2002 defined by the policy information 2000 with location obtained by the GPS sensor 139, a voice signal obtained through the microphone 138, and user's activity information recognized from the image, and identify a trigger point based on whether correspondence has been made.

When the trigger point is identified, the processor 140 may determine the policy performance level by comparing the user's activity with the predefined activity 2003 defined by the policy information 2000 by executing the instructions or program codes of the policy performance level determination code 156.

In operation S2020, the processor 140 may compare information about the activity (for example, "yoga posture"), actor (for example, "yoga instructor"), and object (for example, "user's head, arms, and legs") with the activity 2003 defined by the policy information 2000, and recognize that it is an activity preparation stage. In this case, the processor 140 may control the display 162 of the output interface 160 to output the yoga posture graphic UI 2004 by executing the instructions or program codes of the graphic UI code 158.

In operation S2030, the processor 140 may compare information about the activity (for example, "yoga posture"), actor (for example, "head, legs, and legs"), and object (for example, "user's head, arms, and legs") with the activity 2003 defined by the policy information 2000, and recognize that it is an activity performance stage. When it is recognized that the activity is being performed, the processor 140 may control the output interface 160 not to output a graphic UI by executing the graphic UI code 158.

When the trigger point is not identified in operation S2010, the processor 140 may control the output interface 160 not to output a graphic UI.

The output interface 160 may output the graphic UI 2004 under the control of the processor 140. In an embodiment of the disclosure, the display 162 may display the graphic UI 2004 guiding a yoga posture, based on the policy performance level updated in real time according to the user's activity.

FIG. 21 is a diagram for describing an operation of an augmented reality device 100 determining a policy performance level by recognizing user's activity according to an acting/singing/dancing policy, and outputting a graphic UI 2104 for providing guide information for activity according to the policy performance level, according to an embodiment of the disclosure.

Referring to FIG. 21, the augmented reality device 100 may include a communication interface 110, a camera 120, a sensor 130, an activity recognition code 154, a policy performance level determination code 156, a graphic UI code 158, and an output interface 160. The activity recognition code 154, the policy performance level determination code 156, and the graphic UI code 158 may be implemented in software such as instructions, algorithms, data structures, or program codes stored in the memory 150 (see FIG. 3). The activity recognition code 154, the policy performance level determination code 156, and the graphic UI code 158 are the same as those shown in FIG. 3, and thus, redundant descriptions of the activity recognition code 154, the policy performance level determination code 156, and the graphic UI code 158 are omitted. In an embodiment, functions and/or operations of the augmented reality device 100 may be performed by the processor 140 (see FIG. 3) executing software included in the activity recognition code 154, the policy performance level determination code 156, and the graphic UI code 158.

The communication interface 110 may receive policy information 2100 on yoga from the server 200 of a policy provider (for example, an entertainment agency). The policy information 2100 may include a policy goal 2101, a predefined trigger point 2102, predefined activity 2103, a graphic UI 2104 according to a policy performance level, and information about a penalty 2105. For example, in the "acting/singing/dancing" policy, the policy information 2100 may include emotion/voice expression as the policy goal 2101, may include actor/singer's voice, facial expression, and gesture as the trigger point 2102, may include a motion that deviates from the reference as the predefined activity 2103, may include a graphic UI representing a penalty as the graphic UI 2104, and may include information about the penalty 2105 regarding point deduction. The communication interface 110 may transmit the received policy information 2100 to the policy performance level determination code 156.

The communication interface 110 may receive object information from an external device 300. In an embodiment of the disclosure, the communication interface 110 may transmit and receive data to and from the external device 300 through a nearfield communication scheme such as Bluetooth or Wi-Fi Direct. In the embodiment shown in FIG. 21, the external device 300 may be a camera or microphone of the entertainment agency, and the communication interface 110 may obtain object information from the camera and microphone of the entertainment agency. For example, the object information may include user's facial expression and posture photographed by the camera of the entertainment agency, and the user's speech (for example, voice) received by the microphone. The communication interface 110 may transmit, to the activity recognition code 154, the object information (for example, user's facial expression, posture, voice, etc.) received from the external device 300.

The camera 120 may obtain an image by photographing part of the user's body (for example, user's head, hands, arms, legs, etc.). In the embodiment shown in FIG. 21, the camera 120 may obtain an image by photographing the user's head, arms, legs, etc. in the entertainment agency. The camera 120 may provide image data of the obtained image to the activity recognition code 154.

The sensor 130 may include a gaze tracking sensor 132 and a GPS sensor 139. The gaze tracking sensor 132 is shown in FIG. 5A, and is the same as described with reference to FIG. 5A, and redundant descriptions thereof are omitted. The gaze tracking sensor 132 may obtain gaze information of the user, and provide the obtained gaze information to the activity recognition code 154. For example, the GPS sensor 139 may obtain a current location of the user, for example, location information of the entertainment agency, and provide the obtained location information to the activity recognition code 154.

The processor 140 may recognize, from the image, a location and at least one activity of the user interacting with the object by executing the instructions or program codes of the activity recognition code 154. The processor 140 may recognize user's head, arms, legs, etc. from the images obtained by the camera 120 and the external device 300, and recognize user's facial expression, posture, or gestures based on the recognized head, arms, and legs. The processor 140 may recognize user's voice based on the voice information obtained from the external device 300. The processor 140 may recognize a location of the entertainment agency based on the location information obtained by the GPS sensor 139.

In operation S2110, the processor 140 may compare the recognized location, object, voice, gaze, and activity information with information of the trigger point 2102 defined by the policy information 2100, and identify a trigger point based on whether correspondence has been made.

When the trigger point is identified, the processor 140 may determine the policy performance level by comparing the user's activity with the predefined activity 2103 defined by the policy information 2100 by executing the instructions or program codes of the policy performance level determination code 156.

In operation S2120, the processor 140 may compare information about the activity (for example, "start practicing"), actor (for example, "user's voice, facial expression, and gesture"), and object (for example, "user's head, arms, and legs") with the activity 2103 defined by the policy information 2100, and recognize that it is an activity preparation stage. When the user's activity deviates from the reference defined by the activity 2103 included in the policy information 2100 in the activity preparation stage, the policy information 2100 may control the display 162 of the output interface 160 to display the graphic UI 2104 representing point deduction by executing the instructions or program codes of the graphic UI code 158.

In operation S2130, the processor 140 may compare information about the activity (for example, "practicing"), actor (for example, "user's voice, facial expression, and gesture"), and object (for example, "user's head, arms, and legs") with the activity 2103 defined by the policy information 2100, and recognize that it is an activity performance stage. When the activity is being performed, and the activity being performed does not deviate from the reference defined by the activity 2103 included in the policy information 2100, the policy information 2100 may execute the graphic UI code 158 and control the output interface 160 not to output a graphic UI.

When the trigger point is not identified in operation S2110, the processor 140 may control the output interface 160 not to output a graphic UI.

The output interface 160 may output the graphic UI 2104 under the control of the processor 140. In an embodiment of the disclosure, the display 162 may display, to the user 10, the graphic UI 2104 representing point deduction based on a policy performance level updated in real time, depending on whether the user's activity deviates from the reference defined by the activity 2103 included in the policy information 2100.

The disclosure provides a method, operated by the augmented reality device 100, for providing a guide for user's activity. The operating method of the augmented reality device 100 may include an operation of obtaining, from a server of a policy provider, a policy including at least one activity defined in connection with at least one of a location, a time, a space, or an object (S210). The operating method of the augmented reality device 100 may include an operation of inputting an image obtained through the camera 120 to an artificial intelligence model, and recognizing, from the image, at least one activity of the user interacting with at least one of a location, a time, a space, or an object, by performing inference using an artificial intelligence model (S220). The operating method of the augmented reality device 100 may include an operation of determining a policy performance level of the user by comparing the recognized at least one activity of the user with at least one activity included in the policy (S230). The operating method of the augmented reality device 100 may include an operation of outputting, based on the policy performance level, a graphic user interface (UI) for providing a guide for activity on the policy (S240).

In an embodiment of the disclosure, the obtaining of the policy (S210) may include receiving a user input for determining a policy provided by one policy provider from among a plurality of policy providers or selecting one policy from among a plurality of policies provided by a server of the policy provider, and receiving a policy selected based on the received user input from the server of the policy provider.

In an embodiment of the disclosure, the operating method of the augmented reality device 100 may further include obtaining, by analyzing text included in an obtained policy, a plurality of detailed operations for recognizing the at least one activity defined by the policy and information about a sequence of the plurality of detailed operations (S610).

In an embodiment of the disclosure, in the obtaining of the plurality of detailed operations and the information about the sequence of the plurality of detailed operations (S610), the augmented reality device 100 may obtain, from the image, a set of a plurality of detailed operations for recognizing the at least one activity of the user corresponding to at least one activity included in the policy by combining a plurality of operations trained to be recognizable by using an artificial intelligence model.

In an embodiment of the disclosure, the operating method of the augmented reality device 100 may further include analyzing an image or video included in the policy through inference using an artificial intelligence model, and obtaining a plurality of detailed operations for recognizing at least one activity defined by the policy and information about a sequence of the plurality of detailed operations.

In an embodiment of the disclosure, the operating method of the augmented reality device 100 may further include identifying a trigger point by monitoring at least one of a location, a space, an object, or at least one activity of the user, recognized from the image, corresponds to at least one of a location, a time, a space, an object, or at least one defined activity, included in the policy (S1010). The determining of the policy performance level (S230) may include determining, by the augmented reality device 100, a policy performance level by comparing, in response to the trigger point being identified, the recognized at least one activity of the user with the at least one activity included in the policy.

In an embodiment of the disclosure, the determining of the policy performance level (S230) may include comparing at least one activity of the user recognized in real time from the image with at least one activity included in the policy, and determining whether the activities correspond to each other (S410), and updating a value of a policy performance level in real time by calculating the policy performance level based on whether the activities correspond to each other (S420).

In an embodiment of the disclosure, the outputting of the graphic UI (S240) may include displaying, by the augmented reality device 100, a graphic UI representing a reward determined according to the updated policy performance level.

In an embodiment of the disclosure, the outputting of the graphic UI (S240) may include updating, by the augmented reality device 100, a graphic UI output based on the updated policy performance level.

In an embodiment of the disclosure, the operating method of the augmented reality device 100 may further include receiving, from the external device 300, information about at least one of a location, a time, a space, or an object. The determining of the policy performance level (S230) may include determining a policy performance level by comparing each of the received information about at least one of the location, the time, the space, or the object and the at least one activity of the user recognized from the image with a location, a time, a space, an object, or at least one defined activity included in the policy.

In an embodiment of the disclosure, in the obtaining of the policy, the augmented reality device 100 may receive a plurality of policies from servers of a plurality of policy providers. The determining of the policy performance level may include determining a policy from among the plurality of received policies based on a priority set by a user input, and determining a policy performance level by comparing at least one activity defined by the determined policy with at least one activity of the user recognized from the image.

The disclosure provides the augmented reality device 100 for providing a guide for user's activity. In an embodiment of the disclosure, the augmented reality device 100 may include a communication interface 110 configured to perform data communication with an external server or external device, a camera 120 configured to obtain an image by photographing an object in a real space and a body part of the user, at least one processor 140, and a display 162. The at least one processor 140 may control the communication interface 110 to receive, from a server of a policy provider, a policy including at least one activity defined in connection with at least one of a location, a time, a space, or an object. The at least one processor 140 may input an image obtained through the camera 120 to an artificial intelligence model, and recognize, from the image, at least one activity of the user interacting with at least one of a location, a time, a space, or an object by performing inference using the artificial intelligence model. The at least one processor 140 may determine user's policy performance level by comparing the recognized at least one activity of the user with at least one activity included in the policy. The at least one processor 140 may control the display 162 to output, based on the policy performance level, a graphic UI for providing a guide for activity on the policy.

In an embodiment of the disclosure, the at least one processor 140 may obtain, by analyzing text included in the received policy, a plurality of detailed operations for recognizing at least one activity defined by the policy and information about a sequence of the plurality of detailed operations.

In an embodiment of the disclosure, the at least one processor 140 may obtain, from the image, a set of a plurality of detailed operations for recognizing at least one activity of the user corresponding to at least one activity included in the policy by combining a plurality of operations trained to be recognizable by using an artificial intelligence model.

In an embodiment of the disclosure, the at least one processor 140 may analyze an image or video included in the policy through inference using an artificial intelligence model, and obtain a plurality of detailed operations for recognizing at least one activity defined by the policy and information about a sequence of the plurality of detailed operations.

In an embodiment of the disclosure, the at least one processor 140 may identify a trigger point by monitoring whether at least one of the location, time, space, object, or at least one activity of the user recognized from the image corresponds to at least one of the location, time, space, object, or at least one defined activity included in the policy. In response to the trigger point being identified, the at least one processor 140 may determine a policy performance level by comparing the recognized at least one activity of the user with at least one activity included in the policy.

In an embodiment of the disclosure, the at least one processor 140 may compare at least one activity recognized in real time from an image with at least one activity included in a policy to determine whether the activities match with each other. The at least one processor 140 may calculate a policy performance level based on whether the operations correspond to each other, to update a value of the policy performance level in real time.

In an embodiment of the disclosure, the at least one processor 140 may control the display 162 to display a graphic UI representing a reward determined according to the updated policy performance level.

In an embodiment of the disclosure, the at least one processor 140 may update the output graphic UI based on the updated policy performance level.

In an embodiment of the disclosure, the communication interface 110 may receive, from the external device 300, information about at least one of a location, a time, a space, or an object. The at least one processor 140 may determine the policy performance level by comparing each of the information about at least one of the location, time, space, or object received from the external server or external device and the at least one activity of the user recognized from the image, with a location, time, space, object, and at least one defined activity included in the policy.

In an embodiment of the disclosure, the communication interface 110 may receive a plurality of policies from servers of a plurality of policy providers. The at least one processor 140 may determine a policy from among the plurality of received policies based on a priority set by a user input, and determine a policy performance level by comparing at least one activity defined by the determined policy with at least one activity of the user recognized from the image.

The disclosure provides a computer program product including a computer-readable storage medium. The storage medium may include instructions readable by the augmented reality device 100, in order for the augmented reality device 100 to perform an operation of obtaining, from a server of a policy provider, a policy including at least one activity defined in connection with at least one of a location, a time, a space, or an object, an operation of inputting an image obtained through a camera 120 to an artificial intelligence model, and recognizing, from the image, at least one image of the user interacting with at least one of a location, a time, a space, or an object by performing inference using the artificial intelligence model, an operation of determine a policy performance level of the user by comparing the recognized at least one activity of the user with at least one activity included in the policy, and an operation of outputting, based on the policy performance level, a graphic UI for providing a guide for activity on the policy.

A program executed by the augmented reality device 100 described in the disclosure may be implemented with hardware components, software components, and/or a combination of hardware components and software components. A program may be executed by any system capable of performing computer-readable instructions.

The software may include a computer program, code, instruction, or a combination of one or more thereof, and may configure a processing unit to operate as desired, or command the processing unit independently or collectively.

The software may be implemented with a computer program including instructions stored in a computer-readable storage medium. The computer-readable recording medium may include, for example, magnetic storage media (for example, read-only memory (ROM), random-access memory (RAM), floppy disk, hard disk, etc.), optical read media (for example, CD-ROM), digital versatile disc (DVD)), etc. The computer-readable recording medium may be distributed among computer systems connected via a network, so that a computer-readable code may be stored and executed in a distributed manner. The medium may be readable by a computer, stored in memory, and executed by a processor.

The computer-readable storage medium may be provided in the form of a non-transitory storage medium. Here, "non-transitory" means that the storage medium does not include a signal and is tangible, but does not distinguish whether data is stored semi-permanently or temporarily in the storage medium. For example, the "non-transitory storage medium" may include a buffer where data is temporarily stored.

Furthermore, programs according to embodiments of the disclosure may be included and provided in a computer program product. The computer program products are products that can be traded between sellers and buyers.

The computer program product may include a software program and a computer-readable storage medium in which the software program is stored. For example, the computer program product may include a product (for example, a downloadable application) in the form of a software program electronically distributed by the manufacturer of the augmented reality device 100 or through an electronic market (for example, Samsung Galaxy Store). For electronic distribution, at least a portion of the software program may be stored in a storage medium or temporarily generated. In this case, the storage medium may be a storage medium of a server of the manufacturer of the augmented reality device 100, a server of an electronic market, or a relay server temporarily storing a software program.

In a system including the augmented reality device 100 and/or a server, the computer program product may include a storage medium of the server or a storage medium of the augmented reality device 100. Alternatively, when there is a third device (e.g., a mobile device) communicatively connected to the augmented reality device 100, the computer program product may include a storage medium of the third device. In another example, the computer program product may be transferred from the augmented reality device 100 to the third device, or may include a software program itself that is transferred from the third device to the electronic device.

In this case, one of the augmented reality device 100 or the third device may perform the method according to the embodiments of the disclosure by executing the computer program product. Alternatively, at least one of the augmented reality device 100 or the third device may perform the method according to the embodiments of the disclosure in a distributed fashion by executing the computer program product.

For example, the augmented reality device 100 may control the other electronic device communicatively connected to the augmented reality device 100 to perform the method according to the disclosed embodiments by executing a computer program product stored in the memory 150 (see FIG. 3).

In yet another example, the third device may control the electronic device communicatively connected to the third device to perform the method according to the embodiments of the disclosure by executing the computer program product.

When the third device executes the computer program product, the third device may download the computer program product from the augmented reality device 100 and execute the downloaded computer program product. Alternatively, the third device may perform the method according to the embodiments of the disclosure by executing the computer program product provided in a pre-loaded state.

As described above, although the embodiments are described with limited embodiments and drawings, various modifications and variations may be made by those skilled in the art from the above description. For example, even when the described techniques are performed in a different order than the described method, and/or components such as a described computer system or module are coupled or combined in a form different from the described method, or replaced by other components or equivalents, appropriate results may be achieved.

## Claims

1. A method, performed by an augmented reality device, for providing a guide for user activity, the method comprising:
obtaining, from a server of a policy provider, a policy comprising at least one activity about at least one of a location, a time, a space, or an object;
inputting an image obtained through a camera to an artificial intelligence model, and recognizing, from the image, at least one activity of a user interacting with at least one of a location, a time, a space, or an object by using the artificial intelligence model;
determining a policy performance level of the user by comparing the recognized at least one activity of the user with the at least one activity in the policy; and
outputting, based on the policy performance level, a graphic user interface (UI) for providing the guide for the user activity on the policy.

2. The method of claim 1, further comprising obtaining, by analyzing text in the obtained policy, a plurality of detailed operations for recognizing the at least one activity defined by the policy and information about a sequence of the plurality of detailed operations.

3. The method of claim 1, further comprising identifying a trigger point by monitoring whether at least one of the location, the time, the space, the object, or at least one activity of the user, recognized from the image, corresponds to at least one of the location, the time, the space, the object, or the defined at least one activity, included in the policy,
wherein the determining the policy performance level comprises, based on the trigger point being identified, determining the policy performance level by comparing the recognized at least one activity of the user with the at least one activity in the policy.

4. The method of claim 3, wherein the determining the policy performance level comprises:
comparing at least one activity of the user recognized in real time from the image with at least one activity in the policy, and determining whether the at least one activity of the user recognized in real time and the at least one activity in the policy correspond to each other; and
updating a value of the policy performance level in real time by calculating the policy performance level based on whether the at least one activity of the user recognized in real time and the at least one activity in the policy correspond to each other.

5. The method of claim 4, wherein the outputting the graphic UI comprises displaying a graphic UI representing a reward determined based on the updated policy performance level.

6. The method of claim 4, wherein the outputting the graphic UI comprises updating the graphic UI, based on the updated policy performance level.

7. The method of claim 6, further comprising receiving, from an external device, information about at least one of the location, the time, the space, or the object,
wherein the determining the policy performance level comprises determining the policy performance level by comparing each of the received information about at least one of the location, the time, the space, or the object and the at least one activity of the user recognized from the image with the location, the time, the space, the object, and the defined at least one activity in the policy.

8. The method of claim 7, wherein the obtaining the policy comprises receiving a plurality of policies from servers of a plurality of policy providers, and
wherein the determining the policy performance level comprises:
determining the policy from among the plurality of received policies based on a priority set by the user input; and
determining the policy performance level by comparing at least one activity defined by the determined policy with at least one activity of the user recognized from the image.

9. An augmented reality device for providing a guide for user activity, the augmented reality device comprising:
a communication interface configured to perform data communication with a server of a policy provider;
a camera configured to obtain an image by photographing an object in a real space and a part of a body of a user;
a display; and
at least one processor configured to:
control the communication interface to receive, from the server of the policy provider, a policy comprising at least one activity defined in connection with at least one of a location, a time, a space, or an object;
input the image, obtained through the camera, to an artificial intelligence model, and recognize, from the image, at least one activity of the user interacting with at least one of a location, a time, a space, or an object, by using the artificial intelligence model;
determine a policy performance level of the user by comparing the recognized at least one activity of the user with the at least one activity in the policy; and
control the display to output, based on the policy performance level, a graphic user interface (UI) for providing the guide for the user activity on the policy.

10. The augmented reality device of claim 9, wherein the at least one processor is further configured to obtain, by analyzing a text in the received policy, a plurality of detailed operations for recognizing the at least one activity defined by the policy and information about a sequence of the plurality of detailed operations.

11. The augmented reality device of claim 9, wherein the at least one processor is further configured to:
identify a trigger point by monitoring whether at least one of the location, the time, the space, the object, or at least one activity of the user, recognized from the image, corresponds to at least one of the location, the time, the space, the object, or the defined at least one activity in the policy; and
based on the trigger point being identified, determine the policy performance level by comparing the recognized at least one activity of the user with the at least one activity in the policy.

12. The augmented reality device of claim 11, wherein the at least one processor is further configured to:
compare at least one activity of the user recognized in real time from the image with at least one activity in the policy, and determine whether the at least one activity of the user recognized in real time and the at least one activity in the policy correspond to each other; and
update a value of the policy performance level in real time by calculating the policy performance level based on whether the at least one activity of the user recognized in real time and the at least one activity in the policy correspond to each other.

13. The augmented reality device of claim 12, wherein the at least one processor is further configured to control the display to display a graphic UI representing a reward determined based on the updated policy performance level.

14. The augmented reality device of claim 12, wherein the at least one processor is further configured to update the output graphic UI, based on the updated policy performance level.

15. The augmented reality device of claim 14, wherein the communication interface is further configured to receive, from an external device, information about at least one of the location, the time, the space, or the object, and
wherein the at least one processor is further configured to determine the policy performance level by comparing each of the received information about at least one of the location, the time, the space, or the object and the at least one activity of the user recognized from the image with the location, the time, the space, the object, and the defined at least one activity in the policy.
